# EUROPÄISCHE PATENTSCHRIFT

(11) **EP 3 679 435 B1**
(45) Veröffentlichungstag und Bekanntmachung des Hinweises auf die Patenterteilung: **28.10.2026**
(21) Anmeldenummer: 18752726.2
(22) Anmeldetag: 03.08.2018
(51) Int. Cl.: G05B 19/418, G01S 1/04, G01S 5/02, G01S 13/76, G06Q 10/08, G06Q 50/04

(54) **ASSISTIERTES ZUORDNEN EINES WERKSTÜCKS ZU EINER MOBILEINHEIT EINES INNENRAUM-ORTUNGSSYSTEMS**
ASSIGNING A WORKPIECE TO A MOBILE UNIT OF AN INTERIOR POSITIONING SYSTEM IN AN ASSISTED MANNER
AFFECTATION ASSISTÉE D'UNE PIÈCE À UNE UNITÉ MOBILE D'UN SYSTÈME DE LOCALISATION EN INTÉRIEUR

(30) Priorität: 05.09.2017 DE 102017120381
(43) Veröffentlichungstag der Anmeldung: 15.07.2020
(73) Patentinhaber: TRUMPF Werkzeugmaschinen SE + Co. KG, 71254 Ditzingen (DE)
(72) Erfinder: KIEFER, Manuel, 74889 Sinsheim (DE); OTTNAD, Jens, 76199 Karlsruhe (DE); PÖNITZ, Willi, 71229 Leonberg (DE); SCHNEIDER, Ulrich, 70563 Stuttgart (DE); SCHWARZ, Benjamin, 70825 Korntal-Münchingen (DE); WEISS, Korbinian, 70825 Korntal (DE)
(74) Vertreter: Trumpf Patentabteilung
(86) Internationale Anmeldenummer: PCT/EP2018/071164
(87) Internationale Veröffentlichungsnummer: WO 2019/048153

(56) Entgegenhaltungen:
- WO-A2-2018/073421
- DE-A1- 102011 054 360
- GB-A- 2 513 956
- US-A1- 2005 231 370
- US-A1- 2007 057 050
- CLAIRE SWEDBERG: "Omni-ID's View 10 Tag Aims to Replace Paperwork at Detroit Diesel, Other Factories", RFID JOURNAL, 7 April 2014 (2014-04-07), pages 1 - 5, XP055786922, Retrieved from the Internet <URL:https://www.rfidjournal.com/omni-ids-view-10-tag-aims-to-replace-paperwork-at-detroit-diesel-other-factories> [retrieved on 20210317]
- RAY Y. ZHONG ET AL: "RFID-enabled real-time manufacturing execution system for mass-customization production", ROBOTICS AND COMPUTER-INTEGRATED MANUFACTURING, vol. 29, no. 2, 13 September 2012 (2012-09-13), pages 283 - 292, XP055103098, ISSN: 0736-5845, DOI: 10.1016/j.rcim.2012.08.001
- ZHONG RAY Y ET AL: "A two-level advanced production planning and scheduling model for RFID-enabled ubiquitous manufacturing", ADVANCED ENGINEERING INFORMATICS, ELSEVIER, AMSTERDAM, NL, vol. 29, no. 4, 31 January 2015 (2015-01-31), pages 799 - 812, XP029313400, ISSN: 1474-0346, DOI: 10.1016/J.AEI.2015.01.002
- DETLEF ZUEHLKE: "SmartFactory-Towards a factory-of-things", ANNUAL REVIEWS IN CONTROL, vol. 34, no. 1, 1 April 2010 (2010-04-01), AMSTERDAM, NL, pages 129 - 138, XP055516496, ISSN: 1367-5788, DOI: 10.1016/j.arcontrol.2010.02.008

## Beschreibung

Die vorliegende Erfindung betrifft ein Verfahren zur Überwachung und Steuerung von Fertigungsprozessen, insbesondere von Prozessabläufen bei der industriellen Fertigung von Werkstücken in der Stahl- und/oder Blechverarbeitung. Ferner betrifft die Erfindung ein System zur Werkstückpositionsüberwachung in Fertigungshallen der metallverarbeitenden Industrie, insbesondere bei der Stahl- und/oder Blechverarbeitung. Ferner betrifft die Erfindung die Zuordnung von Werkstücken zu Prozessabläufen im Rahmen der Fertigungssteuerung.

Beispielhaft für die metallverarbeitende Industrie werden in der industriellen Stahl- und/oder Blechverarbeitung oft viele Teile unterschiedlicher Größe verschiedensten Verarbeitungsschritten zugeführt. So werden beispielsweise Werkstücke an Werkzeugmaschinen, z. B. Laserschnittgut oder gestanzte Blechteile, absortiert und weiteren Verarbeitungsschritten zugeführt. Geschnittene oder gestanzte Werkstücke werden dabei nach dem Bearbeitungsvorgang häufig in einem Verbund dem jeweiligen nachgelagerten Produktionsschritt zur Verfügung gestellt. Die verschiedenen Prozessabläufe werden üblicherweise basierend auf einem visuellen Abgleich mit Papier-basierten Unterlagen manuell durchgeführt. Werden jedoch viele unterschiedliche Teilformen geschnitten, verschiedenste Bearbeitungsschritte durchgeführt und unterschiedliche Bereiche in einer Fertigungshalle für die Stahl- und/oder Blechverarbeitung angefahren, so werden derartige Überwachungs- und Steuerungsvorgänge aufwändig und fehleranfällig. So kann eine hohe Teilevielfalt Fehler bei der Teilezuordnung und den nachfolgenden Bearbeitungsschritten, z. B. beim auftragsspezifischen Ablegen in vorgesehenen Werkstücksammelstelleneinheiten oder beim Überstellen zum nachfolgenden Bearbeitungsschritt, hervorrufen. Werden z. B. Teile falsch abgelegt, kann ein nachfolgender Verarbeitungsschritt negativ beeinträchtigt werden, z. B. fehlerhaft durchgeführt werden.

So wird ein physischer Materialfluss meist diskret an Buchungsstationen manuell mit durchzuführenden Bearbeitungsschritten synchronisiert, sodass oft keine detaillierte oder nur eine verzögerte Auswertung stattfinden kann.

Beispielsweise aus den (noch unveröffentlichten) deutschen Patentanmeldungen DE 10 2016 120 132.4 ("Werkstücksammelstelleneinheit und Verfahren zur Unterstützung der Bearbeitung von Werkstücken") und DE 10 2016 120 131.6 ("Absortierunterstützungsverfahren und Flachbettwerkzeugmaschine") mit Anmeldetag 21. Oktober 2016 sind Verfahren zum Unterstützen des Absortiervorgangs von mit einer Flachbettwerkzeugmaschine erzeugten Werkstücken, allgemein Verfahren zur Unterstützung der Bearbeitung von Werkstücken, bekannt. Ferner ist aus der deutschen Patentanmeldung DE 10 2017 107 357.4 "Absortierunterstützungsverfahren und Flachbettwerkzeugmaschine" mit Anmeldetag 5. April 2017 ein Unterstützungsverfahren beim Absortieren von z. B. Schnittgut einer Flachbettwerkzeugmaschine bekannt.

Aus der US 2016/0100289 A1 ist ein Lokalisierungs- und Verfolgungssystem zum Bestimmen von Positionen mobiler drahtloser Vorrichtungen beispielsweise mithilfe der "ultra-wideband" (UWB)-Technologie bekannt, wobei beispielsweise durch Berechnen von Ankunftszeitunterschieden die Positionen der Vorrichtungen gewonnen werden. Auf der UWB-Technologie basierende Bewegungssensoren, die u. a. mit Beschleunigungssensoren erweitert sein können, werden gemäß der US 2015/0356332 A1 beispielsweise für die Leistungsanalyse im Sport offenbart.

Allgemein werden in ZHONG R. Y. et al.: "RFID-enabled real-time manufacturing execution system for mass-customization production", ROBOTICS AND COMPUTER-INTEGRATED Manufacturing, Bd. 29, Nr. 2, 13. September 2012, Seiten 283-292 und ZHONG R. Y. et al.: "A two-level advanced production planning and scheduling model for RFID-enabled ubiquitous manufacturing", ADVANCED ENGINEERING INFORMATICS, ELSEVIER, Amsterdam, NL, Bd. 29, Nr. 4, 31. Januar 2015, Seiten 799-812 eine mehrschichtige Produktionsplanung und Zeitplanerstellung, wie sie insbesondere in Zusammenhang mit RFID-unterstützten Echtzeit-MES umgesetzt werden können, beschrieben. Auch in diesem Zusammenhang liegt eine anfängliche Zuordnung von RFID-Tags und individueller Komponente/individuellem Batch vor, die ein "material operator" mit einem "stationary (RFID-tag) reader" vornimmt.

Einem Aspekt dieser Offenbarung liegt die Aufgabe zugrunde, Verfahren und Systeme vorzuschlagen, die insbesondere im Umfeld der Stahl- und/oder Blechverarbeitung - allgemein Metallverarbeitung - Fertigungsprozesse intelligent unterstützen können.

Zumindest eine dieser Aufgaben wird gelöst durch ein Verfahren für eine Zuordnung eines zu bearbeitenden Werkstücks zu einer Mobileinheit eines Innenraum-Ortungssystems nach Anspruch 1 und durch ein Fertigungssteuerungssystem nach Anspruch 15. Weiterbildungen sind in den Unteransprüchen angegeben.

Erfindungsgemäß umfasst der Bearbeitungsplan-Assistenz-Werkstückdatensatz einen Bilddatensatz des zuzuordnenden Werkstücks und/oder einen Codierungsdatensatz wie einen RFID- oder Strich-Codierungsdatensatz oder einen Codierungsdatensatz einer in das zuzuordnende Werkstück eingebrachten magnetischen Codierung. Das Assistenzsystems ist entsprechend zum Erfassen von Bilddaten von zuzuordnenden Werkstücken zur Erzeugung von einem Bilddatensatz für ein zuzuordnendes Werkstück und/oder zum Erfassen einer Codierung zur Erzeugung von einem Codierungsdatensatz für ein zuzuordnendes Werkstücks ausgebildet. Das Assistenzsystem kann insbesondere zum Erfassen eines Mess-Assistenz-Werkstückdatensatzes für ein von einem Bediener ergriffenes zuzuordnendes Werkstückausgebildet sein. Ferner kann das Assistenzsystem an einer Werkzeugmaschine angeordnet sein und zum Erfassen von Mess-Assistenz-Werkstückdatensätzen für Werkstücke, die von der Werkzeugmaschine ausgegeben werden und zur weiteren Bearbeitung vorgesehen sind, ausgebildet sein.

In einigen Ausführungsformen kann die Werkzeugmaschine dazu ausgebildet sein, das zuzuordnende Werkstück aufzunehmen und in einem der Mobileinheit zugeordneten Ablagebereich abzulegen. Insbesondere kann die Werkzeugmaschine dazu ausgebildet sein, die Mobileinheit und/oder das zuzuordnende Werkstück aufzunehmen und bei einer Werkstücksammelstelle abzulegen, insbesondere auf einem Wagen oder einer Palette.

In einigen Ausführungsformen kann das Assistenzsystem zur Unterstützung eines Absortiervorgangs von auf einem Sortiertisch räumlich nebeneinander angeordneten Werkstücken eine Kamera zum bildgebenden Erfassen des Sortiertischs und zum Erzeugen des Mess-Assistenz-Werkstückdatensatzes für mindestens eines der Werkstücke aus einer Mehrzahl von Absortier-Bilddatensätzen aufweist und der Bearbeitungsplan-Assistenz-Werkstückdatensatz ein Bearbeitungsplan-Bilddatensatz ist, der der Fertigung der räumlich nebeneinander angeordneten Werkstücken zugrunde liegt. Beispielsweise können die zuzuordnenden Werkstücke mit einer Flachbettwerkzeugmaschine, insbesondere einer Laserschneid- oder Stanz-Flachbettwerkzeugmaschine, gemäß Bearbeitungsplänen erzeugt und dem Sortiertisch zugeführt werden. Das Assistenzsystem kann allgemein Zugriff auf die Bearbeitungsplan-Assistenz-Werkstückdatensätze der Fertigungssteuerung haben und das Abgleichen durchführen.

In einigen Ausführungsformen kann das Fertigungssteuerungssystem der Mobileinheit einen Werkstückparameter bereitstellen, der zum Ausgeben von Information über das Werkstück, das der Mobileinheit zugeordnet ist, vorgesehen ist, um eine manuelle Durchführung der räumlichen Zuordnung zu unterstützen. Das Fertigungssteuerungssystem kann ferner die Mobileinheit derart ansteuern, dass mindestens ein Bearbeitungsparameter und/oder Werkstückparameter auf einer Anzeigeneinheit dargestellt wird.

In einigen Ausführungsformen umfasst das Verfahren ferner einen Mobileinheitsdaten-Zuordnungsvorgang, bei dem in dem Fertigungssteuerungssystem ein Mobileinheitsdatensatz der mindestens einen Mobileinheit dem Bearbeitungsplan zugeordnet werden. Der Mobileinheitsdaten-Zuordnungsvorgang kann umfassen:
- ein Positionieren und/oder Schütteln der Mobileinheit in einer geometrisch definierten Zone in der Fertigungshalle,
- ein Interagieren mit dem Fertigungssteuerungssystem über ein Bediener-Interface,
- eine Eingabe einer zu dem Bearbeitungsplan zugehörigen Referenznummer in das Fertigungssteuerungssystem,
- ein automatisiertes oder teilautomatisiertes Aktivieren der Mobileinheit über Sensoren der Mobileinheit umfassend eine Eingabetaste an der Mobileinheit, einen Beschleunigungssensor, einen Lagesensor und/oder einen Schallsensor und/oder
- ein Verknüpfen des Mobileinheitsdatensatzes mit einem Default-Gegenstand in dem Fertigungssteuerungssystem.

Ferner kann der Mobileinheitsdaten-Zuordnungsvorgang zumindest teilweise Auftragsinformation auf die Mobileinheit laden.

Das Verfahren kann ferner für eine Zuordnung mindestens eines zuzuordnenden Werkzeugs oder einer Werkstücksammelstelleneinheit zu einer Mobileinheit des Innenraum-Ortungssystems basierend auf einem Abgleichen eines Mess-Assistenz-Werkzeugdatensatzes mit Bearbeitungsplan-Assistenz-Werkzeugdatensätzen eingesetzt werden.

Mehrere Werkstücke, insbesondere solche, die im Endzustand die gleiche Form aufweisen und die gleichen Prozessschritte durchlaufen haben, und besonders solche, die auch zu einem gemeinsamen Auftrag gehören, werden als Werkstücksammeleinheiten oder Werkstückverbund bezeichnet. Diese werden üblicherweise an einer Werkstücksammelstelleneinheit abgelegt. Es ist vorteilhaft, jeder Werkstücksammeleinheit eine Mobileinheit zuzuordnen, insbesondere sowohl physisch (indem die Mobileinheit in der Nähe einer Werkstücksammelstelleneinheit z. B. auf die Werkstücksammelstelleneinheit platziert wird) als auch organisatorisch (indem ein Mobileinheitsdatensatz einem Bearbeitungsplan im Fertigungssteuerungssystem digital zugeordnet werden). Im Fertigungssteuerungssystem kann eine Liste aller Aufträge (inklusive Bearbeitungsplänen) abgelegt sein. Jeder der Aufträge kann einer Werkstücksammeleinheit zugeordnet werden. Wenn zusätzlich eine Zuordnung der Aufträge zu je einer Mobileinheit erfolgt, dann ist jeder Auftrag in der Fertigungshalle jederzeit lokalisierbar. Dies kann ferner mit rückgemeldeten Informationen von Arbeitsplätzen und/oder Maschinen im Fertigungssteuerungssystem kombiniert werden.

Die Innenraum-Ortung und das Innenraum-Ortungssystem zeichnen sich dabei dadurch aus, dass die Positionsbestimmung der Mobileinheiten allein durch die Analyseeinheit, also ohne manuelle Interaktion, erfolgen kann. Bisherige Systeme zur Ortung von Werkstücken oder Aufträgen in Fertigungsstätten haben den Nachteil, dass verloren gegangene Werkstücke oder Aufträge manuell gesucht werden müssen. Man hat erkannt, dass diese manuellen Suchvorgänge , insbesondere in Fertigungsstätten mit einer hohen Anzahl von kleinen und ständig wechselnden Aufträgen, also z.B. in Lohnfertigungsstätten, einen enorm hohen Anteil der nichtproduktiven Zeit ausmachen. Mit der erfindungsgemäßen Ortung und dem beschriebenen System können die Positionen der Werkstücke und damit der Aufträge z. B. auf einem Bildschirm aufgerufen, gefiltert oder gezielt lokalisiert werden. Die Notwendigkeit von zeitaufwändigen manuellen Suchvorgängen von Werkstücken, aber auch von Werkzeugen oder Personen, kann so insbesondere in der (stahl- und/oder blechverarbeitenden) industriellen Fertigung drastisch verringert werden.

Weitere Vorteile von hierin offenbarten Aspekten betreffen die erleichterte Einbindung einer Innenraum-Ortung in Fertigungsprozesse.

In einigen Ausführungsformen wird die Bearbeitung des oder der Werkstücke an Arbeitsplätzen gesteuert oder überwacht, die mit der Fertigungssteuerung vernetzt oder in diese integriert sind. Derartige Maschinenarbeitsplätze umfassen Maschinen, die Fertigungsanweisungen per Datenverbindung, insbesondere digital, übermittelt bekommen und durchführen. Dabei kann kein oder nur ein minimaler Eingriff durch den Bediener erfolgen. Solche Maschinen werden üblicherweise als automatisierte oder vollautomatisierte Maschinen bezeichnet. Derartige Maschinen können auch den Status der Fertigung an eine Fertigungssteuerung melden.

In einigen Ausführungsformen wird die Bearbeitung des oder der Werkstücke an Arbeitsplätzen, die mit der Fertigungssteuerung nur zu einem sehr geringen Grad oder gar nicht vernetzt oder in diese nicht integriert sind, gesteuert und/oder kontrolliert. Das können Arbeitsplätze sein, bei denen die Arbeitsschritte manuell von Menschenhand durchgeführt werden oder solche, die wohl Maschinen aufweisen, die aber nur zu einem sehr geringen Grad oder gar nicht vernetzt sind oder sich auch nur sehr aufwändig vernetzen lassen, z. B. sogenannte Handarbeitsplätze, wie sie in DE 10 2016 220 015.1, "Handarbeitsplatzeinheit, Arbeits-Datenverarbeitungsvorrichtung, Handarbeitsplatzbetreibungssystem, Handarbeitsplatzbetriebsverfahren und Handarbeitsplatzbereitstellungsverfahren" mit Anmeldetag 13. Oktober 2016 beschrieben sind.

Arbeitsplätze, die nur zu einem sehr geringen Grad vernetzt sind, können beispielsweise Handarbeitsplätze mit einfachen Maschinen sein, wie Arbeitsplätze zum Bohren, Sägen, Fräsen und Biegen. Ihre einzige Vernetzung kann in einem Überwachungssystem bestehen, wie es in der DE 10 2016 220 015.1 beschrieben ist. Eine weitere Vernetzungsmöglichkeit ist die Überwachung der Leistungsaufnahme solcher Maschinen und die Vernetzung der Informationen aus der Leistungsaufnahme. So kann, wenn eine Maschine gar keine Leistung verbraucht hat, z. B. gefolgert werden, dass die Maschine den Auftrag noch nicht abgearbeitet haben kann.

Insbesondere die Kombination aus Fertigungsprozessen mit Arbeitsplätzen, die mit der Fertigungssteuerung vernetzt oder in diese integriert sind und solchen, die es nicht oder nur zu einem sehr geringen Grad sind, stellt heute noch einen wichtigen Hinderungsgrund für die effektive und effiziente Fertigungssteuerung dar, weil Aufträge nach wie vor auf Papier ausgedruckt werden, wenn sie von einem automatisierten Arbeitsplatz zu einem nicht automatisierten Arbeitsplatz kommen. Das verlangsamt die Fertigung. Das erschwert auch die Flexibilität, wenn beispielsweise ein besonders schnell zu bearbeitender Auftrag mit mehreren Prozessschritten an mehreren Arbeitsplätzen innerhalb kurzer Zeit abgearbeitet werden soll. Ein Fertigungsbetrieb, der dies reibungslos sicherstellen kann, hat gegenüber seinen Wettbewerbern, die das nicht können, Vorteile. Mit der Ortung der Werkstücke und der Verknüpfung der Ortung mit der Fertigungssteuerung können die hierin offenbarten Konzepte eine flexible und schnelle Fertigung von Endprodukten ermöglichen.

Basierend auf den hierin offenbarten Konzepten können intelligente Assistenzsysteme in Fertigungshallen eine 2D- oder 3D-Positionsbestimmung von Werkstücken (allgemein Material) und optional Personen, (z. B. Bearbeitern), Transportmedien, Maschinen, Werkzeugen und vielem mehr zur Unterstützung von Fertigungsprozessen nutzen. Dadurch wird es möglich, 2D- oder 3D-Positionen als Information, die zusätzlich zu weiteren Sensorinformationen vorliegt und gemäß den hierin offenbarten Konzepten bestimmt wurde, im Rahmen einer gesamtheitlichen Fertigungssteuerung und Digitalisierung von Fabriken zu verwenden.

Die hierin offenbarten Konzepte basieren auf der Verwendung eines 2D-/3D-Innenraum (in-door)-Ortungssystems als Ausgangsbasis für die ortsabhängige Informationsverarbeitung. Das Ortungssystem kann optional mit weiterer Sensorik, zum Beispiel mit Beschleunigungs- und/oder Lagesensoren, ausgestattet sein und so ferner als Ausgangsbasis für eine lageabhängige Informationsverarbeitung dienen. Dadurch wird insbesondere eine orts- (und gegebenenfalls lage-) abhängige Interaktion im Rahmen des 2D-/3D-Innenraum-Ortungssystems bei der Fertigungssteuerung sowie eine Optimierung von Fertigungsvorgängen möglich. Beispielsweise können virtuelle Schranken (Gates) und Zonen eingesetzt werden, um einen Fertigungsprozess und nachfolgende Produktionsschritte automatisiert zu überwachen und zu steuern. Dies kann insbesondere in Echtzeit erfolgen.

Es wurde erkannt, dass der Einsatz derartiger Ortungssysteme bei Berücksichtigung der zu erwartenden Prozessvorgänge in einer Fertigungshalle auch im speziellen Umfeld einer stahl- und/oder blechverarbeitenden Industriefertigung möglich ist. Entsprechend können derartige Ortungssysteme in ein Fertigungssteuerungssystem (hierin auch als MES (Manufacturing Execution System) bezeichnet) integriert werden. Durch die Berücksichtigung der zu erwartenden Prozessvorgänge in einer Fertigungshalle wird der Einsatz derartiger Ortungssysteme z. B. trotz des vorhandenen Stahls und Blechs möglich, obwohl metallische Werkstücke die verwendeten elektromagnetischen Signale reflektieren und abschirmen können. Der Einsatz ist auch dann noch möglich, wenn die metallischen Werkstücke überdies noch örtlich bewegt werden und sich so die Reflexionsflächen ständig in ihrer Position und Ausrichtung ändern.

Bezugnehmend auf die eingangs erwähnte Verbuchung von physischem Materialfluss und Bearbeitungsschritten entsteht beim Einsatz von 2D-/3D-Innenraum-Ortungssystemen eine Komplexität bei der aufwandsarmen, dynamischen Zuordnung von gewonnener Ortsinformation zu physischen Komponenten. Die hierin offenbarten Konzepte adressieren diese Komplexität und erlauben es beispielsweise, Produktionsaufträge mit zugeordneter Kennung ohne aufwändige Interaktion einer Mobileinheit, mit der zuzuordnende Ortsinformation gewonnen wird, zuzuordnen.

Innenraum-Ortungssysteme erlauben die detaillierte Abbildung von Materialflüssen in der Fertigung innerhalb einer Fertigungshalle in die digitale Prozessverarbeitung. Die Ortungssysteme vereinfachen dabei die Lokalisierung der an der Fertigung teilnehmenden Objekte/Personen im Produktionsumfeld. Werden Werkzeuge, Betriebsmittel oder Ladungsträger initial einmal mit einer Mobileinheit des Ortungssystems ausgestattet, sind diese im digitalen Steuerungssystem manuell oder automatisiert entsprechend digitaler Information zuzuordnen. Dies bezieht sich auch auf temporär an der Fertigung beteiligte Objekte wie beispielsweise Produktionsaufträge oder Servicepersonal. Temporär benötigte dynamische Zuordnungen können immer wieder neu entstehen und werden nur wenige Stunden, Tage oder Wochen in der Fertigungshalle benötigt. Um die dynamische Zuordnung der Mobileinheiten zu neuen Produktionsaufträgen aufwandsarm und zuverlässig zu ermöglichen und sicherzustellen, können die hierin vorgeschlagenen Prozesshilfen verwendet werden.

Dies betrifft insbesondere den Einsatz von optischen Sensoren für die einfache Zuordnung von beispielsweise Produktionsaufträgen zu Mobileinheiten des Ortungssystems. Dabei wird eine enge Verzahnung von Zuordnungsprozess und Fertigungsprozess möglich, die die Prozesssicherheit insbesondere auch in einem noch vorwiegend manuellen Umfeld der Fertigung sicherstellt.

Die hierin offenbarten Ausführungsformen der Integration einer derartigen Innenraum-Ortungstechnologie in die Prozesse der Blechfertigung können u. a. folgende Verfahrensschritte, Verwendungen und Vorteile aufweisen:
- Abbildung der wechselnden Zuordnung von Aufträgen,
- Abbildung einer Assistenz für eine Person, z. B. Bearbeiter, mit Hilfe des Ortungssystems und weiterer Sensorik, insbesondere bei der Lokalisierung von Werkstücken und Werkzeugen,
- Gewährleisten einer prozesssicheren und aufwandsarmen Fertigung durch automatisierte Abläufe mit geringen Freiheitsgraden für den Bearbeiter,
- Intuitiver Fertigungsablauf ohne aufwändige Informationsbeschaffung für den Bearbeiter.

Die Innenraum-Positionsbestimmung kann mit den hierin offenbarten Verfahren auf unter 30 cm, insbesondere unter 10 cm, Genauigkeit in einer von GPS-Satellitensignalen nicht erreichbaren Fertigungshalle mit einem Grundriss im Bereich von z. B. 1 ha erfolgen. Diese Genauigkeit ist mit anderen Techniken (Bluetooth, WiFi, WLAN, Infrarot, Mobilfunk, RFID) im Wesentlichen nicht möglich. Bei der Ortung von Werkstücken, Aufträgen, Personen (z. B. Bearbeitern) und/oder Werkzeug sind viele Anforderungen zu berücksichtigen. Offensichtlich richtet sich die industrielle Fertigung mehr und mehr auf Fertigung von Kleinserien mit vielen einzelnen Arbeitsschritten (Fertigungsprozesse wie z.B. Schneiden, Biegen, Schleifen, Oberflächenbehandlung) an unterschiedlichen Arbeitsplätzen wie Maschinenarbeitsplätze und manuelle Arbeitsplätze ein. So sind oftmals mehrere hundert unterschiedliche Aufträge an einem Tag zu erledigen, die alle unterschiedliche Arbeitsschritte erfordern.

Sobald nur eine Störung auftritt, kann die Fertigungssteuerung sehr schnell sehr unübersichtlich werden. Zeitaufwändig werden halb oder noch gar nicht bearbeitete Aufträge in der Fertigungshalle durch einzelne Personen gesucht und deren Status ermittelt. Dieser wird dann an die Fertigungssteuerung übermittelt. Das kann zu einem erheblichen Zeitverlust bei der eigentlichen Fertigung führen.

Durch die immer schneller werdenden Verarbeitungsschritte bei der produktiven Bearbeitung und bei der Erhöhung der Anzahl unterschiedlicher Aufträge mit immer kleinerer Anzahl von Gleichteilen, können derartige Ausfälle immer häufiger auftreten. Die dadurch verursachten Zeitausfälle reduzieren die produktive Zeit. Sollen Aufträge, Werkstücke, Personen, z. B. Bearbeiter, und Werkzeuge schnell aufgefunden werden, ist die hierin offenbarte Ortung zumindest einzelner dieser Einheiten hilfreich, Fehlzeiten zu reduzieren. Insbesondere erfüllt sie die sehr hohen Anforderungen für eine Industriefertigung.

Bei der Industriefertigung ist eine Ortung in Echtzeit angestrebt. Sie soll örtlich so genau sein, dass Mobileinheiten sicher gefunden und/oder den Bearbeitungsschritten zugeordnet werden können. Dazu hat sich herausgestellt, dass eine Ortung, die nur auf 1 m genau ist, nicht ausreicht. Auch ist eine Ortung, die bei jeder Veränderung des Abstrahlungsverhaltens elektromagnetischer Wellen, verursacht z. B. durch Bewegung von metallischen Werkstücken in der Fertigungshalle, neu kalibriert werden müsste, nachteilig und oft nicht einsetzbar. Die Ortung soll zudem flexibel sein, mehrere Aufträge sollten zu einem Auftrag zusammenfassbar sein, ein Auftrag sollte aufteilbar in mehrere Aufträge sein etc. Die Ortung sollte einfach zu bedienen sein. Sie sollte ausfallsicher sein.

Allgemein können die hierin offenbarten Konzepte eine Erhöhung der Prozesssicherheit, eine Optimierung von Durchlaufzeiten und entsprechend eine Kostenoptimierung der Produktion ermöglichen. Im Speziellen können die hierin offenbarten Konzepte eine z. T. erhebliche Zeiteinsparung im Fertigungsprozess bewirken, wobei sich der Fertigungsprozess z. B. von der Herstellung einer erforderlichen Stückzahl von Teilen bis zur korrekten Weitergabe an einen Nachfolgeprozess (z. B. einen nachfolgenden Metallbearbeitungsschritt) erstreckt. Mehrere Aufträge können ferner quasi gleichzeitig prozesssicher umgesetzt werden. Die hierin offenbarten Konzepte erlauben ferner eine einfache Zuordnung von Werkstücken im Rahmen des Ortungssystems. So können offene Aufträge trotz der Komplexität von mehreren gleichzeitig zu bearbeitenden Aufträgen optimiert werden.

Ferner kann eine flexible Abarbeitung verschiedener Prozessabläufe mit der begleitenden Zeiteinsparung erfolgen, wenn Maschinen wie Laserschneidmaschinen und/oder Stanzmaschinen in den teilautomatisierten Herstellungsprozess eingebunden werden. Ferner kann die Fehlervermeidung und die automatische, korrekte Verbuchung von Werkstücken, Bearbeitungsschritten etc. die Basis für eine datenbasierte Echtzeitsteuerung der Metallverarbeitung (z. B. der Stahl- und Blechfertigung) legen. Entsprechend werden auch Werkzeugmaschinen, die bei der Erstellung von kleinen Losgrößen von Werkstücken eingesetzt werden, in eine von einem MES im Rahmen der Industrie 4.0 gesteuerte Fertigung einbindbar.

Hierin werden Konzepte offenbart, die es erlauben, zumindest teilweise Aspekte aus dem Stand der Technik zu verbessern. Insbesondere ergeben sich weitere Merkmale und deren Zweckmäßigkeiten aus der folgenden Beschreibung von Ausführungsformen anhand der Figuren. Von den Figuren zeigen:
- Fig. 1: eine beispielhafte schematische Darstellung eines Fertigungssteuerungssystems mit einem Innenraum-Ortungssystem,
- Fig. 2: eine Darstellung einer beispielhaften Ausführungsform einer UWB-basierten Mobileinheit,
- Fig. 3: eine Darstellung einer weiteren beispielhaften Mobileinheit auf einem Transportwagen für Werkstücke,
- Fig. 4: einen beispielhaften digitalen Lageplan einer Fertigungshalle,
- Fig. 5: einen weiteren beispielhaften digitalen Lageplan,
- Fig. 6: eine beispielhafte Darstellung einer Werkzeugmaschine, die in ein Innenraum-Ortungssystem eingebunden ist,
- Fig. 7: ein Flussdiagramm zur Verdeutlichung einer mit einem Innenraum-Ortungssystem unterstützten Fertigung und
- Fig. 8: ein Flussdiagramm zur Verdeutlichung von Verfahrensschritten zur industriellen Fertigung eines Endprodukts.

Hierin beschriebene Aspekte basieren zum Teil auf der Erkenntnis, dass mit der Genauigkeit und der Zuverlässigkeit neuer insbesondere auf der UWB-Technologie basierender Ortungssysteme, beispielsweise mit einer Genauigkeit in der Ortsbestimmung von kleiner 30 cm, insbesondere kleiner 10 cm, der Einsatz von Innenraum-Ortungssystemen im Rahmen der industriellen Fertigung sinnvoll möglich wird.

Die hierin offenbarten, für die Integration in die industrielle Fertigung vorgesehenen Ortungssysteme basieren auf Mobileinheiten (hierin auch als "Tags" bezeichnet) und stationären Sende-Empfangseinrichtungen (hierin auch als "Anker" oder "Anchors" bezeichnet). Bei der Integration in die industrielle Fertigung wird zur Positionsbestimmung eines Werkstücks, allgemein eines Gegenstands ("Assets"), dieses jeweils mit mindestens einer Mobileinheit versehen bzw. mit dieser funktionell oder räumlich in Bezug gesetzt (hierin auch als physische oder räumliche Zuordnung bezeichnet). Die Mobileinheiten sind allgemein elektronische Bauteile, die dazu in der Lage sind, mit den Sende-Empfangseinrichtungen, insbesondere mittels UWB-Kommunikationstechnologie, zu kommunizieren. Jede Mobileinheit kann zur Feststellung von Laufzeiten über eine eigene Zeitbestimmungseinheit ("Clock") verfügen.

Eine räumliche Zuordnung kann dadurch durchgeführt werden, dass eine Mobileinheit nahe eines zugeordneten Werkstücks oder am Werkstück selbst positioniert wird oder das Werkstück auf einer Werkstücksammelstelleneinheit, an der eine Mobileinheit vorgesehen ist, beispielsweise ein Transportwagen, ein Sammelbehälter oder eine Palette abgelegt wird. Die Mobileinheit kann dort (oder auch an einer Person) fest angebracht sein oder an dem Werkstück/der Werkstücksammelstelleneinheit anheftbar oder auf ihr abgelegt werden. Für ein Anheften kann die Mobileinheit z. B. über einen Haltemechanismus verfügen, beispielsweise ein Magnet oder eine Klemm-, Schraub-, Klipp-, Bajonett- oder Saugvorrichtung, mit dem sie an dem Werkstück oder an der Werkstücksammelstelleneinheit derart verbunden werden kann, dass sie sich nicht unkontrolliert von dieser lösen kann.

Neben der vorzunehmenden räumlichen Zuordnung eines z. B. Werkstücks zur Mobileinheit kann ferner eine Zuordnung der Mobileinheit (und damit des räumlich zugeordneten Werkstücks) zu dem zugehörigen Produktionsauftrag des Werkstücks vorgenommen werden (hierin auch als digitale Zuordnung des Fertigungsprozesses oder kurz Bearbeitungsplan-Zuordnung bezeichnet).

Voll- oder teilautomatisierte Bearbeitungsplan-Zuordnungen verbinden beispielsweise einen Produktionsauftrag mit einer spezifischen Mobileinheit des Ortungssystems. Sie können beispielsweise durch einen kombinierten Einsatz eines Assistenzsystems im Umfeld des Bedieners und des Ortungssystems durchgeführt werden.

Ein Beispiel eines Assistenzsystems ist ein optisches Assistenzsystem, bei dem mit optischen Sensoren vom Bediener ergriffene Werkstücke oder Werkzeuge erkannt und im Kontext der zur Verfügung stehenden Produktionsdaten aus den Produktionsaufträgen (bevorzugt) eindeutig für die Bearbeitungsplan-Zuordnung identifiziert werden. Ein beispielhaftes Assistenzsystem ist in der eingangs aufgeführten DE 10 2016 120 131.6 offenbart. Derartige Assistenzsysteme können ferner für die räumliche Zuordnung eingesetzt werden, wenn beispielsweise Bilddaten das Werkstück und die Mobileinheiten betreffen. Des Weiteren kann ein oder mehrere an der Mobileinheit vorgesehene Sensoren für die Bearbeitungsplan-Zuordnung, aber auch für die räumliche Zuordnung eingesetzt werden, wie nachfolgend im Zusammenhang mit Ausführungsformen der Mobileinheit erläutert wird.

Die räumliche Zuordnung kann dann die weitere Verfolgung des erkannten und zugeordneten Werkstücks über die lokalisierbare Mobileinheit während des nachfolgenden Fertigungsprozesses unterstützen. Nachfolgend und in Zusammenhang mit den nachfolgend beschriebenen Figuren werden verschiedene physische (räumliche) und digitale (Prozess-) Zuordnungen beispielhaft erläutert. Diese können einzeln oder in Kombination eingesetzt werden. Dabei stellt die enge Verzahnung des Prozessablaufs die Prozesssicherheit im manuellen Umfeld sicher.

Bei der digitalen Zuordnung können die Mobileinheiten mit Produktionsaufträgen verknüpft werden. Die Produktionsaufträge betreffen Bearbeitungsprozesse an verschiedenen Fertigungsstationen, beispielsweise an einer Laserschneidmaschine oder an einer Stanzmaschine sowie z. B. an einem Kommissionierplatz. Zur Verfolgung eines Produktionsauftrages kann nun eine Mobileinheit zur Verfügung stehen. Die digitale Zuordnung kann beispielsweise dadurch erfolgen, dass eine Mobileinheit in einer geometrisch definierten Zone positioniert wird. Bei Anwesenheit der Mobileinheit in der Zone wird diese mit einem der noch nicht zugeordneten Produktionsaufträge verknüpft. Dabei können Informationen zu diesem Auftrag eingangs auf die Mobileinheit geladen werden oder je nach Bedarf auf diese immer aktuell geladen werden.

Die digital zugeordneten Mobileinheiten können z. B. auf Werkstücksammelstellen wie Wagen oder Paletten, allgemein Ladungsträger, vom Bediener verteilt werden, auf denen während der Fertigung die Werkstücke eventuell Kamera-assistiert abgelegt werden (physische Zuordnung). Ebenso können Werkzeuge einer Mobileinheit digital zugeordnet werden. Im Rahmen einer Maschinen-basierten digitalen und/oder physischen Zuordnung können bei ausreichend automatisierten Fertigungsstationen die Mobileinheiten auch durch die im Produktionsprozess befindlichen Maschinen auf den Ladungsträgern positioniert werden.

Bei der physischen Zuordnung kann der Bediener oder eventuell eine entsprechend ansteuerbare Maschine die zuzuordnenden Werkstücke automatisiert auf dem Ladungsträger neben der evtl. bereits digital zugeordneten Mobileinheit ablegen. Die physische Zuordnung wird beispielsweise manuell mit einer Bestätigung direkt an der Mobileinheit oder über das MES abgeschlossen.

Ferner kann die physische Zuordnung durch ein den manuellen Handhabungsvorgang verfolgendes Assistenzsystem unterstützt werden. Nimmt ein Bearbeiter ein Werkstück oder Werkzeug auf, kann diese Aufnahme sensorisch durch das Assistenzsystem erfasst werden. Die Zuordnung durch das Assistenzsystem zu einer bereits digital zugeordneten Mobileinheit kann beispielsweise auf zwei Arten erfolgen. Zum einen kann der Bearbeiter visuell das reale Werkstück/Werkzeug einer schematischen Skizze zuordnen, die auf einer Anzeigeeinheit der Mobileinheit angezeigt wird. Zum anderen kann durch Registrierung des erfolgreichen Griffes eines Werkstücks/Werkzeugs die entsprechend zugeordnete Mobileinheit ein beispielsweise optisches oder akustisches Signal abgeben.

Alternativ zur vorausgehend durchgeführten digitalen Zuordnung kann das Assistenzsystem veranlassen, dass eine Mobileinheit, in dessen Nähe ein Werkstück/Werkzeug abgelegt wird, gemäß des vom Assistenzsystem erkannten Typs des Werkstücks/Werkzeugs digital zugeordnet wird.

Alternativ oder zusätzlich zum kamerabasierten Assistenzsystem kann die dynamische Zuordnung erfolgen, indem z. B. Auftragspapiere und/oder ein Code (z. B. Barcode, QR-Code etc.) der Mobileinheit gescannt werden. Ferner kann ein gemeinsames oder es können zwei separate Fotos mit dem Code der Auftragspapiere und dem Code der Mobileinheit ausgewertet werden. In einigen Zuordnungsverfahren kann dabei ein Foto der Auftragspapiere mit einer Kamera an der Mobileinheit (oder einer separaten Kamera des Bedieners) evtl. ergänzend zu einem optischen Assistenzsystem aufgenommen werden.

Alternativ oder zusätzlich zur Verarbeitung der Information auf Auftragspapieren kann die Sollgeometrie des Werkstücks herangezogen werden. Nach einem Abgleich der beispielsweise mit dem kamerabasierten Assistenzsystem oder der Kamera an der Mobileinheit erfassten Geometrie des Werkstücks mit der Sollgeometrie können dann Informationen aus dem zentralen Produktionsdatensystem nachgeladen und dem Bediener angezeigt werden. Falls die Bildverarbeitung keine eindeutige Identifikation zulässt, kann dem Bediener eine Teilmenge der aktiven Produktionsaufträge auflisten, welche für die erfasste Geometrie in Frage kommen. Der Bediener trifft dann die finale Auswahl und stellt die digitale Zuordnung her.

So lässt sich die Prozesssicherheit verbessern. Insbesondere ähnlich wirkende Werkstücke/Werkzeuge können eindeutig zugeordnet werden, ohne dass sie durch den Bearbeiter beispielsweise verwechselt, entsprechend falsch zugeordnet und fehlerhaft bearbeitet werden.

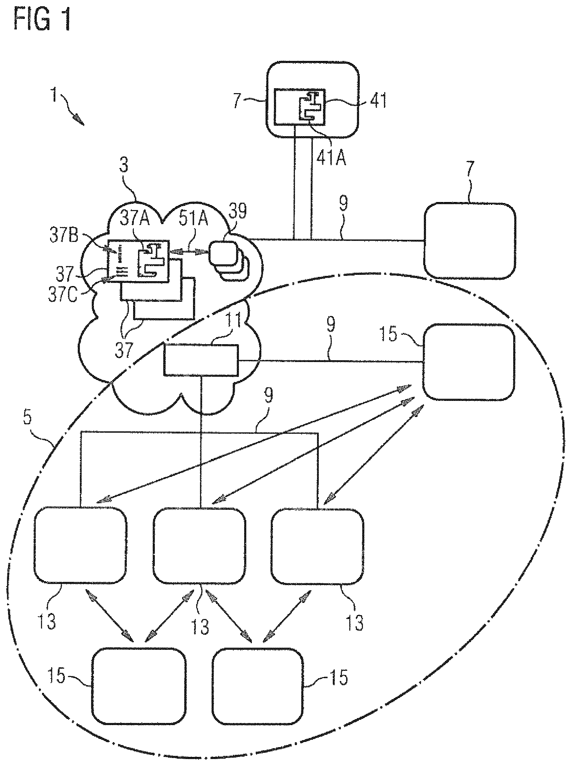

Fig. 1 zeit schematisch ein Fertigungssteuerungssystem 1, das ein MES (Manufacturing Execution System) 3 und ein Innenraum-Ortungssystem 5 (hierin kurz Ortungssystem) umfasst.

Das MES 3 ist mit einer oder mehreren in einer Fertigungshalle positionierten Werkzeugmaschinen 7 über kabellose oder kabelgebundene Kommunikationsverbindungen 9 verbunden. Allgemein dient das MES 3 der Steuerung von Prozessabläufen/Fertigungsschritten bei der industriellen Fertigung von Werkstücken mit den Werkzeugmaschinen 7. Es dient damit insbesondere der Steuerung der Werkzeugmaschinen 7. Dazu empfängt das MES 3 Informationen über die Prozessabläufe/Fertigungsschritte sowie Statusinformation der Werkzeugmaschinen 7. Das MES 3 stellt ein Datenverarbeitungssystem oder allgemein ein Datenverarbeitungsverfahren dar, das in einer Datenverarbeitungsvorrichtung implementiert sein kann. Bei dieser kann es sich um eine einzelne elektronische Datenverarbeitungsvorrichtung (Server) oder um einen Verbund von mehreren Datenverarbeitungsvorrichtungen (Serververbund/Cloud) handeln. Die Datenverarbeitungsvorrichtung oder der Verbund kann örtlich in der Fertigungsstätte vorgesehen werden oder außerhalb dezentral aufgebaut werden.

Eine Plattform, auf der die Datenverarbeitungsvorrichtungen zur Verfügung stehen können - d. h., auf der das MES 3 implementiert werden kann, kann eine sogenannte Cloud sein. Die Cloud umfasst z. B. einen externen Server mit Rechen- und Speicherkapazität, den mehrere Produkthersteller gleichzeitig nutzen können. Dabei kann durch Zugangsauthentifizierungen, Passwörter etc. sicher gestellt werden, dass kein Hersteller auf die Daten eines anderen Herstellers oder des Betreibers der Fertigungsanlage zugreifen kann. Es kann sichergestellt werden, dass kein außenstehender Dritter auf die gespeicherten Daten zugreifen kann. Ein Schutz vor ungewolltem Zugriff kann dadurch gewährleistet werden, dass diejenigen Daten, die in der Cloud gespeichert sind, auch dort verarbeitet werden, und der Hersteller oder Betreiber der Fertigungsanlage, der die Daten nutzen möchte, seinerseits die Daten nur in der Cloud verarbeitet. Derartige Cloud-Nutzungen können zu einer bedeutenden Vereinfachung von Systemkonfigurationen und einer begleitenden Kostenersparnis führen.

Die Datenverarbeitungsvorrichtung kann eine Benutzer-Oberfläche (GUI = Graphical User Interface) mit verschiedenen Anwendungsprogrammen (APPs) aufweisen. Mit der Bereitstellung verschiedener APPs, die ein bestimmtes Anwendungsprogramm ausführen können, kann die Fertigungssoftware, die ein Unternehmen benötigt, segmentiert aufgebaut werden, sodass sie je nach Bedarf - wie bei Nutzung einer spezifischen APP - nur dann abgerufen werden muss, wenn sie benutzt werden soll. Dies ermöglicht, dass eine Nutzung an den Provider, der die Fertigungssoftware bereitstellt, je nach Bedarf vergütet werden kann.

Das Ortungssystem 5 kann mehrere Sende-Empfangseinheiten 13 und mindestens eine Mobileinheit 15 aufweisen. Das Ortungssystem 5 kann ferner mit dem MES 3 zusammenwirken. Beispielsweise kann eine Analyseeinheit 11 des Ortungssystems 5 als ein Teil des MES 3 ausgebildet sein.

Die Sende-Empfangseinheiten 13 können dazu eingerichtet sein, an die Mobileinheiten 15 UWB-Radiosignale zu senden und von diesen UWB-Radiosignale zu empfangen.

Der Abstand zwischen einer örtlich beweglichen Mobileinheit 15 und einer z. B. fest installierten Sende-Empfangseinheit 13, kann durch die Zeit bestimmt werden, die das Signal zum Überwinden der Distanz zwischen den beiden Einheiten benötigt. Werden die Distanzen von mehreren Sende-Empfangseinheiten 13 ermittelt, deren Ort jeweils bekannt ist, kann der räumliche Ort der Mobileinheit 15 in Bezug zu den Sende-Empfangseinheiten 13 z. B. durch Triangulation bestimmt werden.

Für eine Laufzeitbestimmung können die Sende-Empfangseinheit 13 und die Mobileinheit(en) 15 über hochgenaue Uhren verfügen, die die Zeit auf wenige oder sogar nur Bruchteile von ns genau bestimmen können. Auch wenn die Uhren in der Sende-Empfangseinheit 13 und in der Mobileinheit 15 hochgenau sind, so sind die Uhren noch nicht zwingend synchronisiert. Es können unterschiedliche Verfahren der Synchronisation von Uhren oder der Elimination von Fehlern folgend aus dem asynchronen Uhrenverlauf eingesetzt werden. So kann beispielsweise eine der Sende-Empfangseinheiten 13, z. B. als Master-Positionsbestimmungseinheit, ein Signal zu einer ersten Zeit T1 versenden und ein zweites Signal zu einer zweiten Zeit T2. Der Mobileinheit 15 kann der Zeitunterschied T2-T1 bekannt sein oder zusammen mit den Signalen übermittelt werden, so dass sie sich auf die Zeit der Sende-Empfangseinheiten 13 synchronisieren kann. Alternativ kann die Mobileinheit 15 zwei Signale in einem vorbekannten zeitlichen Abstand Ta senden. In diesem Fall kann die Sende-Empfangseinheit 13 anhand ihrer eigenen Zeitmessung mit ihrer eigenen Uhr vom Empfang des ersten Signals bis zum Empfang des zweiten Signals die Synchronisationsabweichung ermitteln und aus der Distanzmessung herausrechnen. Der zeitliche Abstand zwischen dem ersten Signal und dem zweiten Signal sollte gering sein, sodass sich die Mobileinheit in dieser Zeit nicht örtlich wesentlich bewegt hat. Der zeitliche Abstand kann von der Mobileinheit so gewählt werden, dass er ein vorgegebenes Vielfaches oder ein vorgegebener Bruchteil der Zeit ist, die die Mobileinheit benötigt vom Empfang eines Signals, auf das es antworten soll, bis zur Ausgabe des ersten Signals.

Die Sende-Empfangseinheiten 13 können ferner über kabellose oder kabelgebundene Kommunikationsverbindungen mit der Analyseeinheit 11 verbunden sein.

Die Mobileinheiten 15 können beispielsweise nur über die Sende-Empfangseinheiten 13 kommunizieren. Alternativ oder zusätzlich können sie eigenständig über weitere Kommunikationsverbindungen 9 (zum Beispiel eine WLAN-Verbindung) mit der Analyseeinheit 11/dem MES 3 kommunizieren.

Allgemein kann die Datenkommunikation der Sende-Empfangseinheiten 13 und der Mobileinheiten 15 mit dem Fertigungssteuerungssystem 1, insbesondere mit dem MES 3, bidirektional möglich sein.

In einigen Ausführungsformen können WLAN-Sendestationen in die Sende-Empfangseinheiten 13 des Ortungssystems 5 für einen Datenzugang in das Fertigungssteuerungssystem 1 integriert werden, sodass über die Sende-Empfangseinheiten 13 digitale Daten in der Fertigungshalle mobil z. B. über Smartphones oder Tablets zugänglich sind. Die Integration der WLAN- Sendestationen in die Sende-Empfangseinheiten 13 kann die Installation und das Betreiben eines Datenkommunikationssystems in der Fertigungshalle vereinfachen.

Die Analyseeinheit11 kann beispielsweise als eine zentrale Master-Positionsbestimmungseinheit (hierin auch als "Server" bezeichnet) dienen. Diese definiert beispielsweise einen Kommunikationsrahmen für die UWB-Kommunikation. Der Kommunikationsrahmen beinhaltet u. A. die Sendezeit des Rahmens/der UWB-Radiosignale. In einigen Ausführungsformen kann eine der Sende-Empfangseinheiten 13 als Master-Positionsbestimmungseinheit ausgebildet sein.

In einer beispielhaften Umsetzung der Innenraum-Ortung übermittelt die Master-Positionsbestimmungseinheit für eine Positionserfassung einer der Mobileinheiten 15 den Kommunikationsrahmen an die Sende-Empfangseinheiten 13. Dieser Kommunikationsrahmen wird für den Signalaustausch für die Ortung zwischen den Mobileinheiten 15 und den Sende-Empfangseinheiten genutzt. Die Position der stationären Sende-Empfangseinheiten 13 bezüglich der Master-Positionsbestimmungseinheit ist den Sende-Empfangseinheiten 13 beispielsweise durch eine Abfrage einer zentralen Datenbank bekannt, sodass den Sende-Empfangseinheiten 13 sowie der Analyseeinheit 11 der Zeitversatz zwischen Senden und Empfangen des UWB-Radiosignals über die Signallaufzeit bekannt ist.

Nach einem vorbestimmten Zeitintervall, z. B. 100 ms, übermittelt die Master-Positionsbestimmungseinheit einen zweiten Kommunikationsrahmen, der von den Sende-Empfangseinheiten 13 und den Mobileinheiten 15 empfangen wird. Durch Erfassung der Zeit vom Beginn des Empfangs des ersten Rahmens bis zum Beginn des Empfangs des zweiten Rahmens ist den Sende-Empfangseinheiten 13 und den Mobileinheiten 15 bekannt, was die Master-Positionsbestimmungseinheit z. B. genau unter 100 ms versteht. Die Mobileinheiten 15 und die Sende-Empfangseinheiten 13 können so die Frequenz ihrer Zeitbestimmungseinheiten mit der Master-Positionsbestimmungseinheit synchronisieren.

Nach unterschiedlichen, vorher konfigurierten Zeitintervallen (gemessen ab dem Empfang des zweiten Frames) senden die Mobileinheiten 15 ein Antwortframe. Beispielsweise sendet ein "Tag 1" nach 10 ms, ein "Tag 2" nach 20 ms, ein "Tag 3" nach 30 ms, etc. Diese Funkübertragung wird von den Sende-Empfangseinheiten 13 empfangen und der exakte Empfangszeitpunkt in Bezug auf den Sendebeginn des zweiten Frames der Master-Positionsbestimmungseinheit an die Analyseeinheit 11 übermittelt. Die Analyseeinheit 11 ermittelt dann z. B. über Trilaterationsverfahren die Position der Mobileinheiten 15 und gibt diese an das MES 3 weiter.

Eine Gruppe von Sende-Empfangseinheiten 13 kann einer Master-Positionsbestimmungseinheit zugeordnet werden und die Empfangszeiten können an diese übermittelt werden. Zur Erfassung von Positionen in großen Fertigungshallen oder über mehrere Gebäude oder Räume hinweg können mehrere Gruppen von Sende-Empfangseinheiten 13 vorgesehen werden, die jeweils einer eigenen Master-Positionsbestimmungseinheit zugeordnet sind. Diese Master-Positionsbestimmungseinheiten können wiederum untereinander kommunizieren. Je nach Position der Mobileinheiten 15 kann die Übermittlung der Empfangszeiten an unterschiedliche Master-Positionsbestimmungseinheiten (Server) und die Durchführung der Trilateration mit diesen unterschiedlichen Master-Positionsbestimmungseinheiten erfolgen.

Über die beispielhaft zuvor beschriebene Analyse von Laufzeiten und Trilateration kann das Innenraum-Ortungssystem 5 die Position einer oder mehrere Mobileinheiten 15 über die Sende-Empfangseinheiten 13 unter Verwendung der UWB-Technologie erfassen. Die UWB-Technologie nutzt Frequenzbereiche von z.B. 3 GHz bis 5 GHz, wobei die UWB-Technologie einen relativ großen Frequenzbereich zur Ausbildung von zeitlich scharf begrenzten Signalverläufen (Kommunikationsrahmen) nutzt. Um nämlich ein Objekt, das Radiowellen aussendet, möglichst exakt lokalisieren zu können, benötigt man ein Signal mit sehr steilen Flanken. D.h., das Signal stellt eher einen rechteckförmigen Signalverlauf über die Zeit dar als einen sinusförmigen Verlauf. Dazu benötigt man ein Signal, bei dem mehrere sinusförmige Signale mit unterschiedlichen Frequenzen überlagert sind. Denn aus mehreren Sinussignalen mit unterschiedlichen Frequenzen kann eine Signal geformt werden, das eine steile Flanke besitzt und einem im Wesentlichen rechteckförmigen Verlauf über die Zeit angenähert werden kann. Das bedeutet, dass mehrere Frequenzen aus einem breitbandigen Frequenzspektrum zur Verfügung stehen müssen, um ein Signal zu formen. Entsprechend eignet sich für die exakte Lokalisierung insbesondere die UWB-Technologie, die über ein breitbandiges Frequenzspektrum verfügt. Die Technologie und die verwendbaren Frequenzbänder der UWB-Technik sind beispielsweise in dem Standard "IEEE 802.15 -2015" beschrieben.

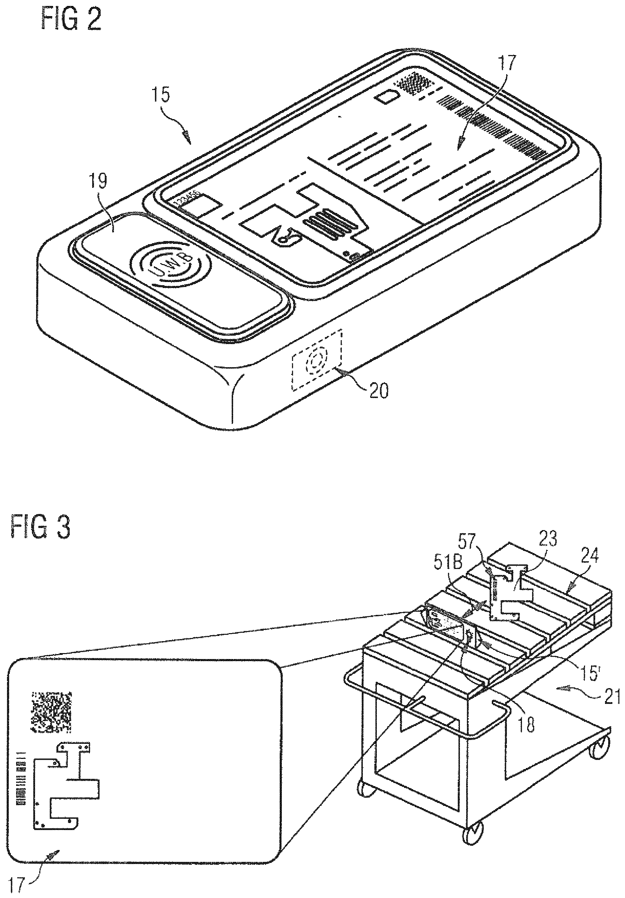

Fig. 2 zeigt beispielhaft eine Mobileinheit 15. Zur Interaktion eines Bedieners mit der Mobileinheit 15 kann diese eine elektronisch ansteuerbare Anzeige 17, beispielsweise ein E-Ink-Display (auch als elektronische Papier-Anzeige bezeichnet), und/oder eine oder mehrere Signalabgabevorrichtungen 18 (LEDs) zur Ausgabe von Informationen aufweisen. Diese können z.B. sein: Art des aktuellen und des nächsten Bearbeitungsschritts, beispielsweise "Laserschneiden", "Entgraten" oder "Biegen"; Name und /oder Identifizierung des Auftrags; Datum, beispielsweise das Datum der Fertigstellung oder des Beginns des Auftrags; Anzahl der zu fertigenden Teile; Name oder Identifizierung des Kunden oder Auftraggebers.

Auf der Anzeige 17 können z. B. Informationen zum Auftrag, lesbar für Mensch und/oder Maschine, codiert und/oder in Schriftform und/oder als Figur dargestellt werden. Die Anzeige 17 kann auch als Signalabgabevorrichtung für eine Rückmeldung an den Benutzer genutzt werden, der die Mobileinheit 15 in einer der beschriebenen Arten bewegt (z. B. schüttelt) oder betätigt (z. B. eine Taste 19 drückt).

Ein weiteres Beispiel einer Signalabgabevorrichtung ist eine Vorrichtung zur Ausgabe von Schall, insbesondere im hörbaren Bereich, insbesondere zur Ausgabe von Sprachinformationen.

Allgemein kann die Mobileinheit 15 eine modulierbare Signalquelle zum Erzeugen von modulierten Licht-, Schall- oder Vibrationssignalen als Signalabgabevorrichtung aufweisen. Sie kann dann - ähnlich dem in der deutschen Gebrauchsmusterschrift DE 20 2016 106 352 U1 beschriebenen Kommunikationsgerät - als Daten sendendes Kommunikationsgerät zur drahtlosen Übertragung von Daten eingesetzt werden. Mithilfe eines derartigen insbesondere kameralosen Kommunikationsgeräts kann eine entsprechend ergänzte Mobileinheit im Zusammenspiel mit einer elektronischen Signalverarbeitungseinheit beispielsweise Zugangsdaten übertragen. Dabei kann das Kommunikationsgerät mindestens einen Sensor zum Empfangen von Licht-, Schall- oder Vibrationssignalen aufweisen und die Signalverarbeitungseinheit kann derart programmiert sein, dass sie aus empfangenen, modulierten Signalen die darin enthaltenen Daten zurückzugewinnt.

Des Weiteren kann in die Mobileinheit 15 mindestens eine Signaleingabevorrichtung (beispielhaft wird in Fig. 2 eine Taste 19 gezeigt) zur Eingabe von Parametern integriert werden.

Die Mobileinheit 15 kann ferner als Signaleingabevorrichtung einen einfachen Sensor zum Empfangen von Licht-, Schall- oder Vibrationssignalen insbesondere einen Helligkeitssensor aufweisen. Sie kann dann, wie beispielsweise in der zuvor erwähnten DE 20 2016 106 352 U1 beschrieben, als Daten empfangendes Kommunikationsgerät zur drahtlosen Übertragung von Daten, insbesondere von Zugangsdaten, von einer Werkzeugmaschine eingesetzt werden. Dazu weist die Werkzeugmaschine mindestens eine modulierbare Signalquelle zum Erzeugen von Licht-, Schall- oder Vibrationssignalen auf, die entsprechend den zu übertragenden Daten moduliert wurden. In einigen Ausführungsformen können z. B. solche Vorrichtungen der Werkzeugmaschine genutzt werden, die die Werkzeugmaschine zur Bearbeitung der Werkstücke ohnehin aufweist und die die Möglichkeit bieten, Schall, Vibrationen oder modulierte Lichtschwankungen zu erzeugen, mit denen Daten zur Mobileinheit 15 übertragen werden können.

In einigen Ausführungsformen kann die Mobileinheit 15 einen Sender und/oder Empfänger für Datenübertragung mittels elektromagnetischer Induktion aufweisen und dafür ausgelegt sein, eine Datenverarbeitung gemäß eines vordefinierten Protokolls durchzuführen (z. B. mittels RFID, NFC: near field communication). Dies ist mit besonders kostengünstigen Hardwarekomponenten erreichbar, die überdies stromsparend ausgebildet werden können. Allgemein ist die Nahfeldkommunikation mittels NFC oder RFID eine robuste, schnelle und drahtlose Kommunikation im Nahfeld.

Die automatisierte bzw. assistierte Zuordnung kann durch in der Mobileinheit vorgesehene weitere Sensoren intuitiv und prozesssicher gemacht werden. Die nachfolgend beschriebenen beispielhaften Sensoren lassen sich jedoch auch in anderem Kontext der Fertigung gewinnbringend einsetzen.

Beispielsweise können Gyroskope, Beschleunigungssensoren, Lagesensoren, Vibrationssensoren und/oder Magnetsensoren für das Erdmagnetfeld vorgesehen werden. Andere MEMS (micro-electro-mechanical system)-basierte Sensoren sind ebenfalls zusätzlich oder alternativ integrierbar.

Derartige Sensoren können durch Sensorfusion mit den Positionsdaten des Ortungssystems eine robustere und genauere Positionsbestimmung bewirken. Außerdem kann ein Sensor (oder auch mehrere zusammen) die Grundlage für eine Interaktion mit einer Person, z. B. einem Bearbeiter bilden, der beispielsweise Gesten ("in die Luft schreiben") oder gezielte Erschütterungen hervorruft. Dies kann ortsabhängig kontextbezogen erfolgen. Eine bestimmte Geste in einer ersten Zone kann dann eine andere Aktion auslösen als in einer anderen Zone.

Die Auswertung der Sensoren der Mobileinheit ist insbesondere dann besonders zielgerichtet und aussagekräftig, wenn sie in den Kontext des Produktionsumfelds gesetzt werden. Im Lagerbereich werden Teilmengen gebildet, beim Schweißen, Montieren, Fügen: mehrere Sensoren zusammengeführt. Sie können ferner zur Qualitätsprüfung und der Kennzeichnung von Ausschuss genutzt werden.

So können Vibrationssensoren zur Identifikation einer Interaktion mit dem Bediener und zur Identifikation von Erschütterungsprofilen (Dokumentation der Produktionsumgebung für spezifische Bauteile) zur Optimierung der Produktionsumgebung eingesetzt werden. Auch können sie zur Detektion von Erdbeben herangezogen werden.

Die Mobileinheit 15 kann ferner eine Kamera 20 aufweisen, die dazu ausgelegt ist, Bilder von Werkstücken und/oder von Codes (z. B. Barcodes oder QR-Codes) auf den Werkstücken oder auf anderen Dokumenten, Werkzeugen oder Produkten aufnehmen zu können. Auf diese Weise kann eine Zuordnung von Werkstücken und/oder Aufträgen zu der Mobileinheit 15 erfolgen. Zusätzlich kann die Mobileinheit eine Funktionalität zur Ermittlung, Verarbeitung und Übermittlung der Kamera-Daten aufweisen.

In einigen Ausführungsformen kann die Mobileinheit 15 einen Sensor (Wiegezelle) zum Ermitteln eines Gewichts eines Werkstücks und/oder einer Werkstücksammelstelle und/oder eines Füllstands einer Werkstücksammelstelle aufweisen. Zusätzlich kann sie eine Funktionalität zur Verarbeitung und Übermittlung von den entsprechend ermittelten Daten aufweisen. Ferner kann der Füllstand einer Werkstücksammelstelle z. B. mittels magnetischer Induktion, elektrischer Kapazität, mittels Ultraschall oder kamerabasiert oder einer Kombination von diesen Technologien überwacht werden.

Die Mobileinheit 15 kann ferner einen Sensor zum Ermitteln einer magnetischen Feldstärke aufweisen. Zusätzlich kann sie eine Funktionalität zur Verarbeitung und Übermittlung von den so ermittelten Daten aufweisen. Ein derartiger Magnetfeldsensor kann dazu genutzt werden, eine magnetische Codierung auszulesen, die z. B. in einem Werkstück eingebracht ist.

Allgemein können derartige Sensoren als Basis für eine eindeutige Identifikation von Blechbauteilen durch die spezifische Struktur von Metallen dienen. Ein Beispiel eines derartigen Sensors ist ein Hall-Sensor. Allgemein können derartige Sensoren für Wirbelstrommessungen aufgebaut sein. Entsprechende Verfahren zur Kodierung und zum Auslesen einer solchen Kodierung sind beispielsweise in DE 102 48 142 B3 oder in DE 43 06 209 A1 offenbart.

In einigen Ausführungsformen kann die Mobileinheit 15 einen Sensor und/oder Sender zum Empfang und/oder zur Übermittlung von Daten über eine Infrarot (IR)-Schnittstelle aufweisen. Zusätzlich kann sie eine Funktionalität zur Verarbeitung und Übermittlung von derartigen IR-Daten aufweisen. IR-Schnittstellen (IR-Diode, IR-LED, bluetooth low energy) als Kommunikationsschnittstellen sind kostengünstig und können sehr stromsparend eingesetzt werden.

Die Mobileinheit 15 kann ferner einen Temperatur-Sensor zusammen mit einer Funktionalität zur Ermittlung, Verarbeitung und Übermittlung von Temperatur-Daten aufweisen. Da der Fertigungssteuerung der Ort der Mobileinheit 15 bekannt ist, kann die Fertigungssteuerung mit den Temperatur-Daten zur Regulierung der Raumtemperatur in der Fertigungshalle eingesetzt werden. Die Fertigungssteuerung kann die Temperatur insbesondere in jedem Bereich der Fertigungshalle, in dem sich eine Mobileinheit mit einem Temperatursensor befindet, erfassen und z. B. grafisch darstellen oder auf Fehlerzustände hin auswerten. So können z. B. eine ungewöhnliche Kälteentwicklung bei offenen Türen erkannt oder Alarm bei ungewöhnlicher Hitzeentwicklung gegeben werden. Ähnlich können die Mobileinheiten ein dezentrales Netz von Feuchtigkeitssensoren zur Regelung der Feuchtigkeit in der Fertigungshalle und/oder von Helligkeitssensoren zur Regelung der Ausleuchtung der Fertigungshalle ausbilden. Neben der Verwendung der Mobileinheit als Sensor für die Gebäuderegelung können derartige Temperatursensoren und Feuchtigkeitssensoren eine Dokumentation über die Fertigungsbedingungen für ein spezifisches Werkstück oder allgemein für den Betrieb der Fertigungsanlage ermöglichen.

In einigen Ausführungsformen kann die Mobileinheit 15 zusätzlich einen GPS-Sensor zusammen mit einer Funktionalität zur Ermittlung, Verarbeitung und/oder Übermittlung von GPS-Daten aufweisen.

Die Mobileinheit 15 kann ferner einen Gas-Sensor, insbesondere einen Rauchmelder, zusammen mit einer Funktionalität zur Ermittlung, Verarbeitung und/oder Übermittlung von Daten zu Gasanalyse aufweisen. So bilden die Mobileinheiten als Rauchmelder ein dezentrales Frühwarnsystem im Brandfall oder im Fall eines Defektes einer Maschine.

In einigen Ausführungsformen kann die Mobileinheit 15 einen Sensor zur Erkennung von biologischen Daten, insbesondere von personenspezifischen Daten wie Fingerabdrücke oder Gesichtserkennungsdaten aufweisen. Die Mobileinheit 15 oder die Fertigungssteuerung kann so individuelle Personen erkennen. Dies erlaubt es, z. B. die Anzeige der Mobileinheit 15 auf eine der Person zugewiesenen Sprache (beispielsweise die Muttersprache der Person) einzustellen. Ferner können bestimmte Informationen nur bestimmten Personen ausgegeben werden, beispielsweise in Abhängigkeit eines der Person zugewiesenen Tätigkeitsprofils.

Die Mobileinheit 15 kann ferner einen Sensor zur Erkennung von Vitalfunktionen einer Person, z. B. eines Bearbeiters, in der Nähe aufweisen. Z. B. können so Daten hinsichtlich Puls/Herzschlag, Muskelkontraktion/-dehnung, Blutdruck erfasst werden. Die Daten erlauben ein Überwachung des körperlichen Zustands der Person und können Rückschlüsse auf seine Aktivität geben. Die Mobileinheit 15 hat entsprechend die Funktionalität zur Ermittlung, Verarbeitung und/oder Übermittlung von so erkannten Daten. Entsprechend kann die Mobileinheit, die von einer Person getragen wird, deren Zustand überwachen.

In einigen Ausführungsformen kann die Mobileinheit 15 einen Sensor zur Erkennung von Audio-Signalen zusammen mit der Funktionalität zur Ermittlung, Verarbeitung und/oder Übermittlung von so erkannten Daten aufweisen. So kann die Mobileinheit mittels Spracheingabe gesteuert werden, Audio-Daten aufnehmen, speichern, auswerten und an andere Mobileinheiten weiterleiten

Die zuvor beschriebenen Sensoren und Funktionen auf der Mobileinheit 15 können beispielsweise durch die Fertigungssteuerung aktiviert oder deaktiviert werden. Die Aktivierung einzelner Funktionalitäten kann als eine Option vom Betreiber oder Inverkehrbringer des Fertigungssteuerungssystems in Form eines speziellen Lizensierungsverfahrens zeitlich gesteuert werden. Wünscht z. B. ein Fertigungsstättenbetreiber bestimmt Funktionen nur für eine bestimmte Zeit, z. B. die Temperaturüberwachung nur wenn seine Fertigungshalle nicht in Betrieb ist, so kann er sich gemäß dem Lizensierungsverfahren diese Funktionalität für eine von ihm vorgegebene Zeitspanne freischalten lassen. Das kann z. B. durch das Lizensierungsverfahren günstiger für ihn sein, als wenn er die Funktionalität ununterbrochen benutzt. Für den Betreiber oder Inverkehrbringer des Fertigungssteuerungssystems kann dies den zusätzlichen Nutzen haben, dass er die tatsächlich genutzten Funktionalitäten seiner Kunden besser kennenlernt.

Üblicherweise wird die Elektronik der Mobileinheit 15 mit einer Batterie oder einem Akku betrieben. Ein Akku kann durch nach außen geführte Kontakte oder kontaktlos, z. B. induktiv geladen werden. Beides kann so erfolgen, dass die Mobileinheit 15 zum Schutz vor Feuchtigkeit und Umwelteinflüssen ein dicht umschließendes Gehäuse aufweist. Die Mobileinheit 15 kann ferner eine Vorrichtung zum Laden der Akkus aufweisen, die Energie aus Umwelteinflüssen gewinnt, z. B. dem sogenannten "energy harvesting" aus Temperaturunterschieden zwischen Ober- und Unterseite, aus schnellen Bewegungen wie Vibrationen oder Stöße oder aus vorhandenen elektromagnetischen Wellen (z. B. Solar).

Damit die Batterie oder der Akku sparsam betrieben wird, kann die Mobileinheit 15 einen Stand-by-Modus einnehmen, in dem sie z. B. kein UWB-Signal mehr sendet und/oder den Empfang deaktiviert. In einigen Ausführungsformen kann sie den Stand-by-Modus selbständig verlassen. Beispielsweise kann sie so, wenn sie bewegt wurde, der Fertigungssteuerung einen neuen Ort übermitteln.

Allgemein können einzelne oder mehrere der beschriebenen Sensoren einzeln für sich oder in Kombination für derartige Steuerungsverfahren genutzt werden. Insbesondere sind die Sensoren zur Lage- und Beschleunigungsdetektion zur Ansteuerung derartiger Wechsel im Betriebsmodus geeignet.

In einigen Ausführungsformen kann die Mobileinheit 15 ein Gehäuse aus einem der folgenden Materialien oder einer Kombination daraus aufweisen: Kunststoff, Metall und Gummi. Das Gehäuse kann ferner an seinen Ecken und/oder Kanten zum Schutz vor Beschädigung ein federndes Material wie Gummi aufweisen. Letzteres kann auch zum Schutz vor einem Abrutschen z. B. beim Transport dienen.

Die zuvor beschriebenen Sensoren liefern maschinenlesbare Informationen, die dem Bediener prozesssicher abgebildet werden. Als Informationsschnittstelle kann die Anzeigeeinheit der Mobileinheit genutzt werden. Alternativ kann eine Anzeige einer Fertigungsanlage oder eine in der Fertigungshalle spezifisch vorgesehene Anzeige genutzt werden. Die auf der Anzeigeneinheit der Mobileinheit dargestellten Daten können nicht immer vollständig den gesamten Informationsgehalt eines Werkstücks abbilden, allerdings kann sie kontextbasiert die für den entsprechenden Fertigungsvorgang notwendigen Daten darstellen, beispielsweise den nächsten Fertigungsvorgang für die Logistik, Teilegeometrie für die Kommissionierung, Bauteiltoleranzen für die Qualitätsprüfung. Darstellungsparameter wie Größe, Farbe, Bewegung und Blinken stellen dabei geeignete Mittel zur Betonung und Unterstützung von aktuell wichtigen Informationen dar.

Ferner kann als exponiertes Element der menschenlesbaren Information eine LED auf der Mobileinheit vorgesehen werden, die dem Menschen durch unterschiedliche Farben, Blinkfrequenzen oder Blinkmuster codierte Informationen visuell mitteilen kann. Eine insbesondere blinkende LED ist auch auf große Entfernungen leichter zu erkennen, als z. B eine Anzeige 17. Deswegen hat eine Signalvorrichtung wie eine LED besondere Vorteile, wenn z. B. eine Mobileinheit 15 gesucht wird. Sie kann von einem Bediener ferngesteuert adressiert werden und sich dann mit einer Signalvorrichtung bemerkbar machen. Zusätzlich oder alternativ kann sie ein Geräuschsignal abgeben. Eine solche ferngesteuerte Adressierung kann beispielsweise durch eine weitere Mobileinheit oder über eine sonstige insbesondere tragbare Vorrichtung, z. B. Smartphone, Tablet, oder über die Analyseeinheit 11 erfolgen. Sie kann aber auch direkt, z. B. über Nahfeldsender (z. B. Bluetooth, NFC, IR), erfolgen.

Im Rahmen einer industriellen Fertigung von Werkstücken in der Stahl- und/oder Blechverarbeitung werden die Mobileinheiten 15 üblicherweise Werkstücken zugeordnet. Optional können Mobileinheiten von Personen in der Fertigung getragen oder an Hilfsmittel wie Transportwagen, Maschinen und Werkzeugen angebracht werden, wodurch auch hier eine (räumliche und digitale) Zuordnung der Mobileinheit zu einer Person, z. B. einem Arbeiter, oder einem Hilfsmittel vorgenommen werden kann, um Vorgänge zu unterstützen und/oder zu erfassen. Die digitale Zuordnung bezieht sich hierbei auf Personen-spezifische oder Hilfsmittelspezifische Informationen.

Beispielsweise zeigt Fig. 3 einen Transportwagen 21 mit einem Werkstück 23 sowie einer Mobileinheit 15'. Der Transportwagen 21 umfasst einen Ablagebereich 24 für dieses oder mehrere solcher Werkstücke 23, die im Rahmen eines Bearbeitungsplans von einer Werkzeugmaschine erzeugt wurden. Die Mobileinheit 15' zeigt beispielsweise eine für diese Werkstücke 23 spezifische Information auf der Anzeige 17 an, die aufgrund der digitalen Zuordnung abrufbar ist.

Die Mobileinheit 15' ist entsprechend dazu ausgebildet, z. B. vom MES 3 Informationen über die abgelegten Werkstücke 23 zu empfangen und für einen Bediener auszugeben. Beispielsweise ist die Mobileinheit 15' z. B. dazu ausgebildet, Information über die Anzahl der abgelegten Werkstücke 23, noch fehlende Werkstücke, einen nachfolgenden Bearbeitungsschritt, einen zugrundeliegenden Auftrag (Kunde), Soll-Material etc. zu empfangen und auf der Anzeige 17 auszugeben. Die Anzeige 17 kann dabei stromsparend eine E-Ink-Anzeige sein.

Ferner kann ein Signal oder Feedback über ein Aktivieren einer Signalabgabevorrichtung, beispielsweise einer oder mehrerer LEDs oder einer akustischen Signalquelle gegeben werden. Allgemein sind derartige Signalabgabevorrichtungen zum Ausgeben von Feedback-Signalen an einen Bediener ausgebildet.

Ferner kann die Mobileinheit 15' (ergänzend) Signaleingabevorrichtungen aufweisen. So können beispielsweise ein Erschütterungssensor (beispielsweise ein Beschleunigungssensor) und/oder ein Lagesensor als Signaleingabevorrichtung vorgesehen werden.

Derartige Mobileinheiten können, insbesondere in Form von solchen kombinierten Signal-, Anzeige- und Ortungseinheiten, als unabhängige Einheiten im Prozessablauf bei der Fertigung eingesetzt werden. Sie können einem oder mehreren Werkstücken 23 räumlich zugeordnet werden und dann von einem Bediener zusammen mit den zugeordneten Werkstücken 23 von Bearbeitungsschritt zu Bearbeitungsschritt/von Werkzeugmaschine 7 zu Werkzeugmaschine 7 gebracht werden.

Eine derartige Mobileinheit kann ferner, insbesondere in Form von solchen kombinierten Signal-, Anzeige- und Ortungseinheiten, in einem Transportwagen, einer Paletten oder allgemein einer bewegbare Werkstücksammelstelleneinheiten integriert werden. Zusammen mit diesen kann sie als unabhängige Einheit im Prozessablauf bei der Fertigung eingesetzt werden. Diese Einheit kann dann einem oder mehreren Werkstücken 23 räumlich zugeordnet werden (indem z. B. auf ihr positioniert werden) und dann von einem Bediener dazu genutzt werden, die zugeordneten Werkstücken 23 von Bearbeitungsschritt zu Bearbeitungsschritt/von Werkzeugmaschine 7 zu Werkzeugmaschine 7 zu bringen.

Die Bereitstellung von Mobileinheiten in der Fertigung kann vielfältig genutzt werden. Im Folgenden werden beispielhafte Nutzungsszenarien skizziert.

Die Mobileinheiten werden über die Sende-Empfangseinheiten 13 mittels Laufzeitanalyse geortet. Die Sende-Empfangseinheiten 13 sind üblicherweise an der Hallendecke, an Hallenwände, Werkzeugmaschinen 7, Lagerstrukturen etc. ortsfest installiert. Die Positionen der Sende-Empfangseinheiten 13 sind zum Beispiel in einem digitalen Lageplan der Fertigungshalle hinterlegt.

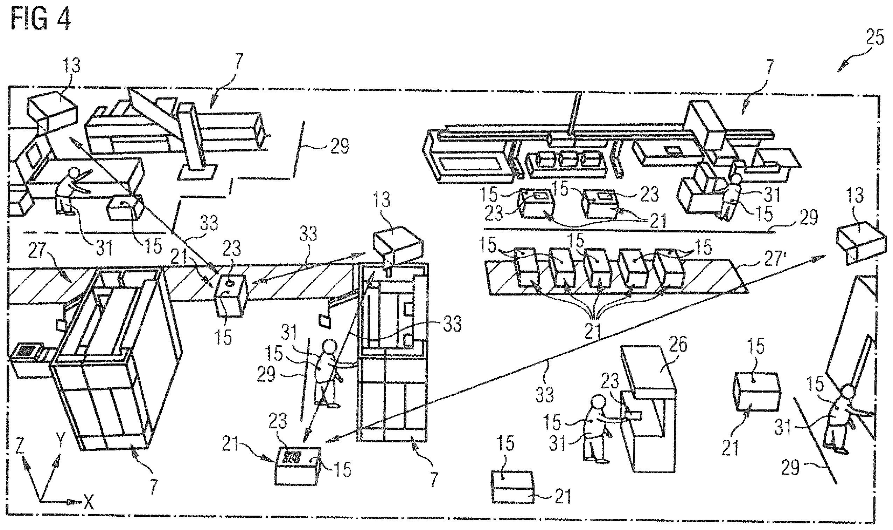

Fig. 4 zeigt einen schematischen digitalen Lageplan 25 einer beispielhaften Fertigungshalle, die mit mehreren Werkzeugmaschinen 7 unterschiedlichen Typs ausgerüstet ist. Beispiele für Werkzeugmaschinen 7 in der Stahl- und Metallverarbeitung sind Schneid-, insbesondere Laserschneidmaschinen, Stanz-, Schleif-, Biegemaschinen etc. Gezeigt ist im Lageplan 25 auch ein zu einem sehr geringen Grad vernetzter Arbeitsplatz 26, wie beispielsweise ein Handarbeitsplatz mit einfachen Maschinen, z. B. zum Bohren, Sägen, Fräsen, Biegen, die keine Vernetzung oder nur eine Vernetzung über ein Überwachungssystem, wie es z. B. in DE 10 2016 220 015.1 beschrieben ist, aufweisen. Ferner erkennt man im Lageplan Zonen 27, 27' und Schranken 29. Die Zonen 27, 27' und Schranken 29 wurden von einem Bediener hinsichtlich der Benutzung der Werkzeugmaschinen 7 und zugehöriger Arbeitsabläufe definiert. Die Schranken 29 erstrecken sich räumlich (beispielsweise linear) in der Fertigungshalle und definieren Grenzen, deren Übertreten durch eine Mobileinheit spezifische Aktionen auslösen kann. Den Zonen 27, 27' und Schranken 29 können allgemein Werkstück-spezifische bzw. Gegenstand/Bediener-spezifische Eigenschaften zugeordnet werden. Eine wie in Fig. 4 dargestellte Ansicht kann z. B. auf einem Bildschirm (Monitor) einer Datenverarbeitungsvorrichtung (z. B. PC) schematisch dargestellt sein. Beim Aktivieren einzelner Zonen, Schranken oder Mobileinheiten auf dem Monitor (z. B. mittels eines Cursors oder bei Touchpads mittels einer Berührung) können Statusinformationen angezeigt werden. Nach bestimmten Mobileinheiten kann gefiltert werden, (z. B. alle Mobileinheiten mit Zuordnung zu Aufträgen eines bestimmten Kunden). Die Temperaturverteilung gemessen mit Temperatursensoren der Mobileinheiten kann angezeigt werden. Der Status von Maschinen kann angezeigt werden, etc.

So können Aktionen unter Nutzung der räumlichen Zuordnung im Fertigungssteuerungssystem ausgelöst werden, wenn eine Mobileinheit sich innerhalb einer spezifischen Zone befindet oder eine spezifische Schranke überschreitet, wobei diese Aktionen in Abhängigkeit des zugehörigen Werkstücks/Gegenstands und dessen Bearbeitung/Bearbeitungszustand, allgemein aufgrund der digitalen Zuordnung, variieren können. Die Zonen 27, 27' und die Schranken 29 können ferner in der Fertigungshalle vor Ort farblich markiert werden.

Ferner erkennt man im Lageplan 25 schematisch Werkstücksammelstellen, beispielsweise Transportwagen 21 oder Teilbereiche von diesem, die sich beispielsweise nahe einer Werkzeugmaschine 7 oder in einer der Zonen 27 befinden. Ferner kennt man schematisch Bediener 31, die die Werkzeugmaschinen 7 bedienen.

Im digitalen Lageplan 25 sind somit nicht nur stationäre Elemente (Werkzeugmaschinen), sondern aufgrund der räumlichen und digitalen Zuordnung der Mobileinheiten auch bewegliche Elemente (Werkstücke, Transportwagen, Bediener) angezeigt. Die Integration von beweglichen Elementen in den Lageplan wird durch die Innenraum-Ortung möglich, indem zum Beispiel den Transportwägen 21 und Bedienern 31 jeweils eigene Mobileinheiten 15 zugeordnet werden.

Ferner erkennt man im digitalen Lageplan 25 beispielhafte Positionen mehrerer Sende-Empfangseinheiten 13. Die Positionen sind derart gewählt, dass mindestens 2 (2D-Ortung) oder 3 und mehr (3D-Ortung) Sende-Empfangseinheiten 13 einem entsprechenden mit der Innenraum-Ortung abzudeckenden Bereich in der Fertigungshalle zugeordnet sind. Beispielhaft werden Laufzeitmessungen für bewegliche Elemente (bzw. die zugeordneten Mobileinheiten 15) über Doppelpfeile 33 in Fig. 4 verdeutlicht.

Die primäre Anwendung des Innenraum-Ortungssystems 5 liegt in der Lokalisierung von Werkstücken 23, allgemein Material, sowie von bei der Fertigung eingesetzten mobilen Einheiten wie Transportwägen 21, Stapler, Werkzeuge und sonstige mobile Vorrichtungen. Dass diese Objekte unter Nutzung der Ortsinformation der Mobileinheit, deren räumlicher Zuordnung und digitaler Zuordnung, die im Wesentlichen nur die Mobileinheit und die Art des zugeordneten Objekts betrifft, einfacher mittels der jeweils zugeordneten Mobileinheit 15 lokalisiert werden kann, reduziert bzw. vermeidet Suchzeiten. Die gewonnene räumliche Information über die Objekte erlaubt zusätzlich eine Analyse von Prozessabläufen und von einer (Aus-) Nutzung von z. B. Werkzeugen.

Die Ortung kann in 2D oder 3D erfolgen. Liegt beispielsweise ein 3D-Lageplan der Fertigungshalle vor (wie in Fig. 4 gezeigt), kann neben der primären horizontalen Lokalisierung auch eine vertikale Lokalisierung vorgenommen werden. Somit ist neben den Koordinaten x und y in der horizontalen Ebene auch die Höhenkoordinate z zu beachten. Eine Ortung in 3D stellt spezifische Anforderungen an die Sende-Empfangseinheiten 13, die den der 3D-Ortung zugrunde liegenden Bereich abdecken, sowie an deren Positionen in der Fertigungshalle.

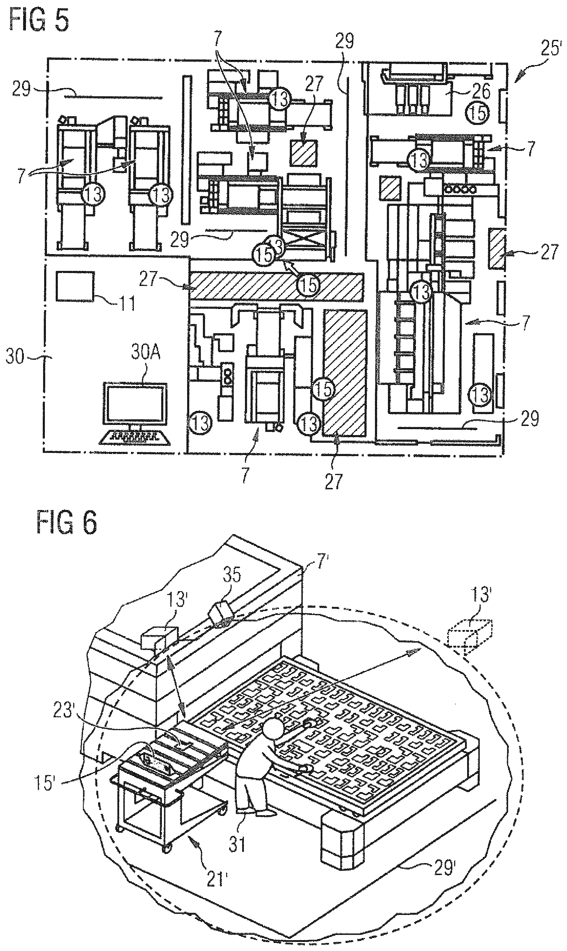

Fig. 5 zeigt eine Aufsicht eines weiteren digitalen Lageplans 25' einer weiteren beispielhaften Fertigungshalle. Man erkennt mehrere Positionen von Sende-Empfangseinheiten 13 (Anchors) und mehrere momentane Positionen von Mobileinheiten (Tags) 15. Ferner erkennt man wiederum mehrere Zonen 27 und Schranken 29. Mit dem Ortungssystem können die Positionen der Mobileinheiten 15 im Lageplan 25' angezeigt werden und ihre Lage bezüglich der Zonen 27 und der Schranken 29 zu Steuerungszwecken bei der Bearbeitung von Werkstücken genutzt werden. Dazu ist es wiederum notwendig, dass einer Mobileinheit 15 ein Werkstück (oder eine Gruppe von Werkstücken) oder ein Bediener, ein Transportmittel, ein Werkzeug etc. zugeordnet wird. In einem Steuerungsbereich 30 ist die Lage einer Fertigungssteuerungseinrichtung des Fertigungssteuerungssystems 1 angedeutet. Hier kann sich die Analyseeinheit 11 befinden. Hier kann sich auch eine Datenverarbeitungsvorrichtung 30A (z. B. PC) mit einem Bildschirm (Monitor) befinden, auf dem z. B. der in Fig. 4 oder Fig. 5 dargestellte digitale Lageplan 25 oder 25' angezeigt wird.

Insbesondere die digitale Zuordnung einer Mobileinheit zu einem Werkstück (oder einem bei der Fertigung eingesetzten Gegenstand wie einem Werkzeug) kann durch verschiedene Interaktionen mit dem Fertigungssteuerungssystem 1 (nachfolgend auch kurz der Fertigungssteuerung) erfolgen. Beispielsweise kann in einem Bediener-Interface der Fertigungssteuerung, das zum Beispiel auf einem Smartphone oder Tablet bereitgestellt wird, das jeweilige Werkstück/der jeweilige Gegenstand ausgewählt und der spezifischen Mobileinheit durch Eingabe beispielsweise einer zugehörigen Referenznummer zugeordnet werden. Alternativ kann nach Auswahl eines Werkstücks/Gegenstands im Benutzer-Interface die Mobileinheit durch Aktivieren einer Eingabetaste an der Mobileinheit (siehe z. B. Taste 19 in Fig. 2) und dem zugeordneten Datenaustausch der Mobileinheit mit der Fertigungssteuerung die Zuordnung hergestellt werden.

Anstelle einer manuellen Eingabe kann beispielsweise alternativ automatisiert oder teilautomatisiert eine Aktivierung der Mobileinheit durch eine vorgegebene Bewegung zur Aktivierung, z. B. Schütteln, Klopfen oder Vibrieren derselben, erfolgen. Eine solche vorgegebene Bewegung kann beispielsweise ein in der Mobileinheit zusätzlich vorgesehener Beschleunigungssensor erkennen. Ferner kann eine teilautomatisierte Zuordnung durch manuelles Kenntlichmachen einer spezifischen Mobileinheit (z. B. durch Schütteln der Mobileinheit) an einem spezifischen Ort (z. B. einer definierten Zone 27) erfolgen. Dabei kann die Fertigungssteuerung dem spezifischen Ort des z. B. Schüttelns spezifisch zu bearbeitende Werkstücke zuordnen. Beispielsweise kann die Fertigungssteuerung auch auf eine Verknüpfung einer Mobileinheit mit einem Default-Gegenstand (z. B. einem leeren Rollwagen) bei Schütteln der Mobileinheit an einem definierten Zuordnungsbereich (z. B. Zone 27' in Fig. 4) schließen.

Ferner kann beispielsweise mittels Bildverarbeitung eine Aufnahme der Mobileinheit, die beispielsweise mit einer Kennzeichnung wie einem Barcode versehen ist (siehe Anzeige in Fig. 2), und des zugeordneten Werkstücks/Gegenstands die Zuordnung vorgenommen werden.

Des Weiteren kann eine grafische Zuordnung über einen am Bediener-Interface dargestellten Dialog vorgenommen werden.

Im Ortungssystem können je nach Anwendung aktive oder inaktive Mobileinheiten eingesetzt werden. Aktive Mobileinheiten teilen permanent in einer gewünschten Wiederholrate zyklisch ihre Position dem Fertigungssteuerungssystem mit. Allgemein werden aktive, wiederholt (periodisch) emittierende Sender auch als "beacon" (Leuchtfeuer) bezeichnet. Dagegen nimmt eine inaktive Mobileinheit zeitweise nicht an einer Ortserkennung teil. Dies kann zum Beispiel dann der Fall sein, wenn der letzte mutmaßliche Standort der Mobileinheit bekannt ist, das zugeordnete Werkstück für einen längeren Zeitraum eingelagert wird, eine Auftragsbearbeitung ausgesetzt wird oder längere Liegezeiten zwischen Bearbeitungsvorgängen zu erwarten sind.

Für die Überwachung derartiger Zustände können in der Mobileinheit vorgesehene Sensoren wie ein Beschleunigungssensor, ein Lagesensor oder ein Schallsensor eingesetzt werden. Allgemein kann ein Wechsel vom inaktiven in den aktiven Zustand durch (digitale) Signale oder manuelle Manipulation ausgelöst werden. Eine manuelle Manipulation kann beispielsweise durch eine gezielte Erschütterung der Mobileinheit (z. B. manuelles Schütteln) oder durch den Beginn des Transports des Werkstücks (Transfer durch eine Schranke 29) erfolgen. Für aktive Mobileinheiten können Mobileinheit-spezifisch beliebige Wiederholraten definiert werden. Mit Regelwerken können hier entsprechend der Kontext-Informationen sinnvolle Verhaltensmuster für jede Mobileinheit bzw. das zugeordnete Werkstück oder einen Gegenstand definiert werden. Kontext-Informationen können beispielsweise eine Zonen-Zugehörigkeit, zuletzt passierte räumliche Schranken, ein jeweils aktiver Bearbeitungsvorgang, ein aktuelles Zeitfenster (Tag/Nacht/Wochentag) und eine spezifische Tag-Familie umfassen.

In einem Nutzungsszenario soll eine Person, z. B. ein Bearbeiter, gemäß einem Auftrag Werkstücke 23 biegen. Hierzu greift er auf Daten aus dem Fertigungssteuerungssystem (MES; Produktionsleitsystem) zu und öffnet beispielsweise den digitalen Lageplan 25, 25' der Fertigungshalle. Wurden die Werkstücke mit einer Mobileinheit 15 (Werkstück-Tag) versehen, wird ihm der Ort der zu biegenden Werkstücke 23 anhand einer zugeordneten Mobileinheit 15 im Lageplan 25, 25' angezeigt,. Beispielsweise wurden die Mobileinheit 15 und die Werkstücke 23 auf einem Transportwagen 21 abgelegt und die Mobileinheit 15 sowohl den Werkstücken 23 als auch dem Transportwagen 21 zugeordnet. Entsprechend kann im Lageplan das Symbol Transportwagen z. B. zusammen mit einer schematischen Form des Werkstücks angezeigt werden.

Zur Verdeutlichung zeigt Fig. 6 einen Absortiervorgang eines Bedieners 31, der Schnittgut einer Laserschneidmaschine 7', das auf einem Sortiertisch ausgegeben wird, auf den Transportwagen 21' sortiert/ablegt. Eine Mobileinheit 15' wurde gemäß einem spezifischen Auftrag aktiviert (Bearbeitungsplan-Zuordnung) und den Werkstücken 23' zugeordnet (räumliche Zuordnung). Nach dem erfolgten Absortiervorgang hat der Bediener 31 beispielsweise eine Taste der Mobileinheit 15' aktiviert, sodass das Fertigungssteuerungssystem vom Abschluss des Absortiervorgangs informiert wird.

Damit weiß der Bediener der nachfolgend zu benutzenden Werkzeugmaschine, an welcher Stelle in der Fertigungshalle die Werkstücke zu finden sind (Nutzung der Ortsinformation der Mobileinheit). Ist der Bediener dort angekommen, was mithilfe einer vom ihm getragenen Mobileinheit und einem Passieren einer Schranke 29' erkannt und an das Fertigungssteuerungssystem weitergeleitet wurde, und stehen mehrere Transportwägen eng zusammen, kann der Bediener den richtigen Transportwagen identifizieren, indem das Fertigungssteuerungssystem automatisch eine LED (Signalabgabevorrichtung) an der entsprechenden Mobileinheit aktiviert, sodass diese beispielsweise blinkt. An diesem optischen Signal kann der Bediener den richtigen Transportwagen erkennen und zu seinem Biege-Arbeitsplatz mitnehmen. Die Abholung des Transportwagens wird beispielsweise an das Fertigungssteuerungssystem weitergegeben, sobald der Bediener den Transportwagen 21' abholt und über die Schranke 29' schiebt.

Das Innenraum-Ortungssystem erlaubt ferner eine Indizierung von Hochlagern im Bestand. Beispielsweise kann über ein Barometer der Mobileinheiten (3D-Tag) die Höhe der Mobileinheit und damit die "Zeile" in einem Lager identifiziert werden. Über mindestens zwei Sende-Empfangseinheiten (2D-Ortung) kann die Spalte des Lagers identifiziert werden. Bei der Präsenz von Mobileinheiten im Lagerkörper kann damit direkt das jeweilige Lagerfach für beispielsweise eine mit der Mobileinheit ausgerüstete Palette im Fertigungssteuerungssystem hinterlegt werden. Entsprechend kann ein Bediener die Palette mit Angabe des Lagerfachs direkt auffinden. Alternativ können drei oder mehr Sende-Empfangseinheiten im Hochlager derart positioniert werden, dass auch eine Ortsbestimmung im dreidimensionalen Raum möglich wird.

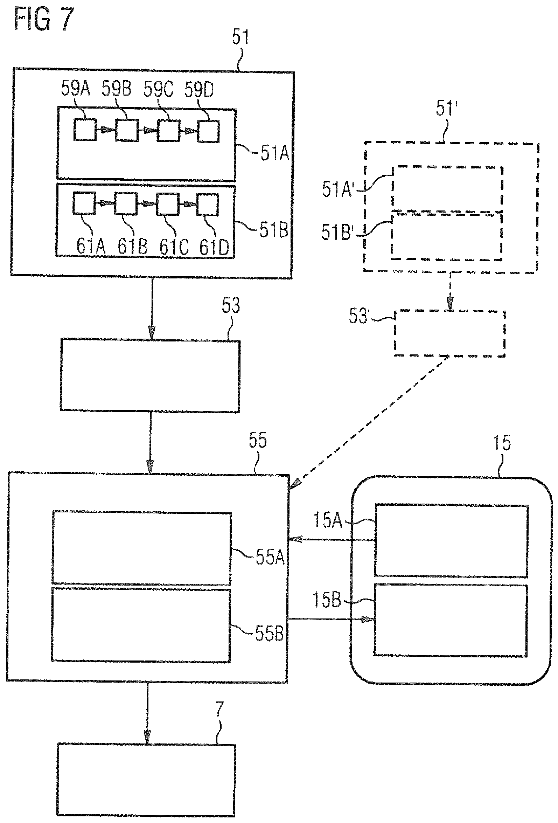

Die Einbindung der hierin beschriebenen mit einem Innenraum-Ortungssystem unterstützten Fertigung wird zusammenfassend in Verbindung mit Fig. 7 erläutert. Hierbei wird u. a. ergänzend auf die Figuren 1 bis 3 und 6 Bezug genommen.

Fig. 7 zeigt beispielhaft Verfahrensschritte eines Verfahrens zur Fertigungssteuerung von Prozessabläufen bei der industriellen Bearbeitung von Werkstücken 23, wobei das Verfahren durch eine Innenraum-Ortung unterstützt wird. Für das Verfahren wird entsprechend eine wie zuvor beschriebene Innenraum-Ortung bereitgestellt (Schritt 51), und es werden Zuordnungsvorgänge durchgeführt, um eine Mobileinheit 15 einem oder mehreren Werkstücken 23 zuzuordnen. Die Zuordnungsvorgänge umfassen einen Mobileinheitsdaten-Zuordnungsvorgang (Schritt 51A) - d. h., die zuvor beschriebene digitale Zuordnung - und einen räumlichen Zuordnungsvorgang (Schritt 51B) - d. h., die zuvor beschriebene physische Zuordnung.

Der Mobileinheitsdaten-Zuordnungsvorgang des Schritts 51A ist schematisch in Fig. 1 im Fertigungssteuerungssystem 1 angedeutet. Im Fertigungssteuerungssystem 1 sind Bearbeitungspläne 37 abgelegt. Ein Bearbeitungsplan 37 kann - als Beispiele für einen Bearbeitungsplan-Assistenz-Werkstückdatensatz - einen Geometriedatensatz 37A und/oder einen das Werkstück identifizierenden Codierungsdatensatz 37B umfassen. Ferner kann der Bearbeitungsplan 37 einen oder mehrere Bearbeitungs- und Werkstückparameter 37C des entsprechenden Werkstücks 23 umfassen. Überdies stellt das Ortungssystem 5 Mobileinheitsdatensätze 39 bereit, die den Bearbeitungsplänen 37 zugeordnet werden sollen.

Für die digitale Zuordnung kann eine Bilderfassungsvorrichtung 20, die z. B. Teil der Mobileinheit 15 ist, bereitgestellt werden (Schritt 59A). Fig. 2 zeigt hierzu schematisch die Bilderfassungsvorrichtung 20 an der Seitenwand der Mobileinheit 15. Mit der Bilderfassungsvorrichtung 20 kann beispielsweise ein Ausdruck eines Auftragsschreibens mit einer Codierung oder eine Codierung 57 auf dem Werkstück 23 - als Beispiel für einen bearbeitungsplanspezifischen Gegenstand - aufgenommen werden (Schritt 59B). Diese Aufnahme wird dann mit einem Kommunikationssystem von der Mobileinheit 15 an das Fertigungssteuerungssystem 1 übermittelt. Im Fertigungssteuerungssystem 1 wird der Bearbeitungsplan 37, der einen entsprechenden Codierungsdatensatz 37B umfasst, identifiziert (Schritt 59C) und dem Mobileinheitsdatensatz 39, der z. B. zu der Mobileinheit 15 gehört, mit der die Codierung aufgenommen worden war, zugeordnet (Schritt 59D).

Alternativ kann diese Art der digitalen Zuordnung mit jeder in das Fertigungssteuerungssystem 1 eingebundenen bildgebenden Vorrichtung ausgeführt werden, wobei dann ein Mobileinheitsdatensatz einer beliebigen Mobileinheit dem identifizierten Bearbeitungsplan zugeordnet werden kann.

Die räumliche Zuordnung kann von einem Assistenzsystem 41, das bei einer Werkezugmaschine 7 oder allgemein an einem Arbeitsplatz vorgesehen ist, unterstützt werden. Fig. 6 zeigt hierzu eine Werkzeugmaschine 7 mit einem optischen Assistenzsystem, das auf einer Bilddatenerfassung mit einer Kamera 35 basiert und die Zuordnung eines Werkstück zu einer Mobileinheit unterstützt. Dabei werden Mobileinheiten bereitgestellt, denen im Rahmen einer vorausgehenden digitalen Zuordnung (Schritt 51A) Bearbeitungspläne zugeordnet wurden.

Bei der assistierten räumlichen Zuordnung erkennt die Kamera 35 ein absortiertes Werkstück 23 (Schritt 61A) und erzeugt hierzu einen Mess-Assistenz-Werkstückdatensatz 41A (Schritt 61B). Der Mess-Assistenz-Werkstückdatensatz 41A wird mit den Geometriedatensätzen 37A der Bearbeitungspläne 37 im Fertigungssteuerungssystem 1 abgeglichen (Schritt 61C), um den Bearbeitungsplan 37 zu identifizieren, der zum erfassten Werkstück gehört. Das Fertigungssteuerungssystem 1 kann nun z. B. die identifizierte Mobileinheit zur Abgabe eines Signals anregen (LED-Blinken, Tonerzeugung, ...); um ein manuelles räumliches Zuordnen zu erleichtern. Alternativ oder ergänzend kann das Fertigungssteuerungssystem 1 im Rahmen einer automatisierten Zusammenführung von Mobileinheit 15 und erfasstem Werkstück 23 ein Ablegen des erfassten Werkstücks 23 bei der identifizierten Mobileinheit 15 veranlassen (Schritt 61D).

Nach erfolgter Zuordnung wird die Position des zugeordneten Werkstücks 23 durch Lokalisierung der zugeordneten Mobileinheit 15 mit dem Innenraum-Ortungssystem 5 bestimmt (Schritt 53). Die bestimmte Position der zugeordneten Mobileinheit 15 wird nun in die Steuerung der Industriefertigungsanlage zur Fertigung des Endprodukts eingebunden (Schritt 55). Ergänzend oder alternativ kann ferner eine Position eines Werkzeugs, einer Person, eines Transportmittels, einer Werkzeugmaschine und/oder einer Werkstücksammelstelleneinheit bestimmt werden (Schritte 51', 51A', 51B', 53') und in die Steuerung der Industriefertigungsanlage eingebunden werden.

Die Einbindung kann beispielsweise ein Definieren (Schritt 55A) von Zonen 27 und/oder räumlichen Schranken 29 in der Fertigungshalle, insbesondere in einem Lageplan 25, 25' der Fertigungshalle, und ein Abgleichen (Schritt 55B) der bestimmten Position hinsichtlich der Zonen 27 und/oder der räumlichen Schranken 29 umfassen.

Im Lageplan der Fertigungshalle kann im Schritt 55A z. B. eine Zone (Werkzeugmaschinen-Zone) um Werkzeugmaschinen/ Bearbeitungsplätze, beispielsweise um die Biegemaschine, erstellt werden. Dabei kann diese Zone als Volumenkörper (3D-Zone) definiert werden, der beispielsweise bis zu einer Höhe von 1,5 m über dem Hallenboden reicht. Wird ein Transportwagen mit Werkstücken und einer zugehörigen Mobileinheit (Wagen-Tag) mit zu einem Auftrag gehörenden Werkstücken in diese Zone geschoben, registriert das Fertigungssteuerungssystem im Schritt 55B dies.

Die Unterstützung der Fertigungssteuerung von Prozessabläufen kann dabei die hierin diskutierten Einbindungsmöglichkeiten der Mobileinheit umfassen. Z. B. kann eine zusätzliche Übertragung von Signalen zwischen dem Fertigungssteuerungssystem 1 und der Mobileinheit 15 zum Austausch von Information stattfinden. Die Signale können von einer Signaleingabevorrichtung 15A der Mobileinheit 15 - z. B. ein Sensor, eine Taste 19 oder die Bilderfassungsvorrichtung 20 - oder von Signalabgabevorrichtungen 15B der Mobileinheit 15 - z. B. eine Anzeigeneinheit 17, eine LED oder ein Lautsprecher - erzeugt werden.

Ferner kann die Unterstützung der Fertigungssteuerung von Prozessabläufen über das Fertigungssteuerungssystem 1 Bearbeitungsparameter auf den Werkzeugmaschinen 7 ansteuern oder allgemein Fertigungsparameter einstellen, die sich z. B. auch auf die Fertigungshalle oder auf eine nachfolgende Datenanalyse beziehen können.

Als weiteres Beispiel für die Einbindung in die Fertigungssteuerung kann unter Nutzung der digitalen Zuordnung des Schritts 51A das Fertigungssteuerungssystem den zugehörigen Bearbeitungsauftrag am Bearbeitungsplatz (beispielsweise an der Biegemaschine) anmelden. Ferner können weitere Sekundäraktionen automatisch initiiert werden. So kann ein zugehöriges Bearbeitungsprogramm in der Werkzeugmaschine automatisch geladen werden. Dies kann es erlauben, dass die Werkzeugmaschine (beispielsweise eine Biegemaschine) über einen Tool-Master automatisch gerüstet wird. Auf einem zugeordneten Bildschirm können einem Bediener für den nun anstehenden Bearbeitungsvorgang (Arbeitsgang) notwendige Informationen angezeigt werden. Beispielsweise können eine Abbildung der ursprünglichen Form des Werkstücks sowie die gebogene Form des Werkstücks, die Anzahl der zu biegenden Werkstücke und/oder der anschließend nachfolgende Bearbeitungsvorgang etc. angezeigt werden.

Ein Vorteil bei der Bearbeitung in Zusammenhang mit definierten Zonen und Schranken liegt darin, dass der Bearbeiter nichts weiter machen muss, als die mit der zugehörigen Mobileinheit gekennzeichneten Werkstücke in die zugehörige Werkzeugmaschinen-Zone zu bringen, wodurch die verschiedenen vorbereitenden Maßnahmen automatisiert veranlasst wurden. Wie erwähnt kann die Werkzeugmaschine z. B. sofort automatisch auf den neu zu bearbeitenden Auftrag eingestellt werden. Dadurch kann erheblich Zeit eingespart werden und Fehler können vermieden werden.

Beginnt der Bediener nun die Werkstücke des Auftrags zu bearbeiten (zum Beispiel zu biegen), kann er die Mobileinheit nehmen und diese an aktive Komponenten der Werkzeugmaschinen, beispielsweise an den Biegebalken, heften. Dort ist eine weitere Zone (Buchungszone) definiert, die automatisch den Auftrag in Bearbeitung nimmt und dies an das Fertigungssteuerungssystem weitergibt. Beispielsweise können so die vorgenommenen Biegevorgänge überwacht und für den Auftrag abgespeichert werden. Wurden alle Werkstücke bearbeitet (gebogen), wird die mobile Einheit aus der Buchungszone entfernt, wodurch der Auftrag beispielsweise als vollständig ausgeführt im Fertigungssteuerungssystem verbucht werden kann.

Auch hier kann durch die Verwendung der Mobileinheit in einem Ortungssystem erheblich Zeit eingespart werden, da der Bediener keine komplizierten Buchungen an einem Terminal vornehmen muss.

Interagiert eine Mobileinheit mit dem Fertigungssteuerungssystem oder betätigt ein Bediener Zusatzfunktionen (Eingabetasten etc.) einer Mobileinheit, kann der Bediener von den Mobileinheiten Feedback oder Mitteilungen über Ausgabemittel wie RGB-LED, Vibration, angezeigten Text oder Ton erhalten. So kann beispielsweise der Status einer Mobileinheit oder eines zugehörigen Auftrags visualisiert werden, beispielsweise indem eine LED grün leuchtet, solange sich der Auftrag im Zustand der Bearbeitung befindet. Ferner kann Feedback oder eine Mitteilung an nachfolgende Bearbeitungsplätze gegeben werden. So kann die automatische Buchung eines abgeschlossenen Bearbeitungsvorgangs den nachfolgenden Prozess darauf aufmerksam machen, dass die Teile nun bereit stehen und wo sie sich befinden. Allgemein kann eine Auslösung von Aktionen wie das Buchen über Zonen noch weiter angereichert werden, sodass beispielsweise Werkstücke während der verschiedenen Bearbeitungsvorgänge zeitlich überwacht werden können.

Wird zusätzlich zur Ortsposition die Lage-im-Raum einer Mobileinheit gemessen, kann beispielsweise unterschieden werden, ob eine spezifische Mobileinheit waagerecht liegt oder hochkant steht. Dies erlaubt eine weitere Interaktion mit dem Fertigungssteuerungssystem. Beispielsweise kann ein Wagen mit Werkstücken mehrerer Aufträge (d. h., mehreren unterschiedlichen und z. B. unterschiedlich zu bearbeitenden Werkstücken) und mehreren Mobileinheiten in eine Zone geschoben werden. Sollen nicht alle Aufträge gleichzeitig in Bearbeitung genommen werden, kann ein spezifischer Auftrag, der beispielsweise zuerst bearbeitet werden soll, durch ein Senkrechtstellen der entsprechenden Mobileinheit dem Fertigungssteuerungssystem bekanntgegeben werden.

Eine weitere Möglichkeit, dem Fertigungssteuerungssystem über die Mobileinheit Feedback zu geben, ist das bereits angesprochene Schütteln der Mobileinheit oder die Durchführung von spezifischen Gesten-artigen Bewegungen.

Ferner ist es möglich, basierend auf der Anzahl der sich in einer oder mehreren Zonen befindenden Mobileinheiten (beispielsweise gerade aktive und oder inaktive Mobileinheiten) Ereignisse auszulösen oder bevorstehende Ereignisse anzuzeigen. Beispielsweise können Kommissioniervorgänge oder Transportaufgaben ausgelöst werden.

Neben stationären Zonen können zusätzlich Zonen dynamisch mit einem oder mehreren Mobileinheiten mitwandern. Dies erlaubt beispielsweise den Transport mehrerer Ladungsträger (Transportwägen), und die mitgeführten Aufträge können gemeinsam als Cluster vom Fertigungssteuerungssystem behandelt werden.

Ferner kann eine Mobileinheit zum Beispiel an einem Handarbeitswerkzeug (Werkzeug-Tag) befestigt (räumliche Zuordnung) und digital hinsichtlich des Werkzeugs selbst zugeordnet werden, sodass dieses leichter geortet werden kann. Zudem kann mittels eines in einem derartigen Werkzeug-Tag vorgesehenen Beschleunigungssensors ermittelt werden, wann und/oder wie das Handarbeitswerkzeug genutzt wird.

Durch die Positionsermittlung des Werkzeugs ist es ferner möglich, die Bewegung des Werkzeugs durch den Raum zu messen (Trajektorien-Information/Auswertung). Hierdurch können Informationen darüber generiert werden, wie viele Bauteile bearbeitet wurden oder ob ein Bearbeitungsschritt vergessen wurde etc.

Ferner können weitere Daten über das Ortungssystem übermittelt werden, beispielsweise Fehlermeldungen durch entsprechende Bewegungsmuster einer Mobileinheit z. B. in einer definierten Fehler-Zone.

Ein weiteres Nutzungsszenario betrifft die Erfassung von Prozesszuständen, die durch die Positionen von Werkstücken, Menschen, Maschinen und anderen Betriebsmitteln gekennzeichnet sind und die durch eine kognitive Auswertung dieser gemessenen Positionen erfasst werden können. Allgemein lassen die Ortungs- und Sensordaten sowie die Informationen bezüglich Zonen und Schranken eine Vielzahl an Auswertemöglichkeiten zu. So ist es beispielsweise möglich, mittels derartiger Rohdaten Kennzahlen wie Key-Performance-Indikatoren (KPIs) zu erzeugen und detaillierte Analysen zu Optimierung der Fertigungsvorgänge durchzuführen. Diese Analysen (z. B. KPIs) können beispielsweise in Form von "heat maps", als Live-Ansicht oder aggregiert dargestellt werden. Weitere Auswertungsdiagramme wie Spagetti-Diagramme sind so für verschiedene Bearbeitungsvorgänge sofort abrufbar. Dies erlaubt es, Standardkennzahlen, die oft einen großen Aufwand bei der Erhebung erzeugen, auf Knopfdruck verfügbar zu machen, wie z. B. Durchlaufzeit, Wertstromanalyse etc. Zudem können die Abläufe in der Produktion auf Basis der gewonnen Ortungsinformationen mit Hilfe von numerischen Optimierungsverfahren verbessert werden.

Die Nutzung des Ortungssystems erlaubt es auch Personen zu orten, wenn diese eine Mobileinheit (Personen-Tag) bei sich tragen. Neben Werkstücken und Werkzeugen gibt die Ortung von Personen (als Ganzes oder auch lokale Ortungen von Bein, Arm und Hand) wertvolle Information über Abläufe in der Produktion. Nutzungsszenarien hierzu betreffen beispielsweise die Überwachung sicherheitskritischer Bereiche zum Schutze von Personen, insbesondere der Bearbeiter. Ferner können Bewegungsmuster generiert werden, die wiederum z. B. zur Prozess- oder Ergonomie-Verbesserung von Arbeitsplätzen der Bediener ausgewertet werden können. Insbesondere über die synchrone Auswertung beider Hände einer Person, insbesondere eines Bedieners oder Bearbeiters, können detaillierte Informationen über den Fertigungsvorgang und das Werkstück erfasst werden. So kann erfasst werden, dass
- ein Bearbeiter an einer Position X zugegriffen hat;
- ein Bearbeiter ein spezifisches Werkstück von A nach B transportiert hat;
- ein Bearbeiter ein spezifisches Werkstück an einer Position Y abgesetzt hat;
- ein Fertigungsvorgang wie Bohren, Einpressen, ... x-Mal ausgeführt wurde;
- ein Fertigungsvorgang wie Entgraten, Schweißen, ... auf einer spezifischen Trajektorie an einem Werkstück ausgeführt wurde;
- ein Fügeprozess an einer spezifischen Position durchgeführt wurde.

Verschiedene Mobileinheiten können in spezifischen Beziehungsverhältnissen zueinander stehen. Beispielsweise können derartige Mobileinheiten im Rahmen eines spezifischen Fertigungsprozesses in Familien von Mobileinheiten gruppiert werden, um grundlegende (Verhaltens-) Muster für eine bestimmte Anzahl von Mobileinheiten zu definieren. Familien können beispielsweise einem Auftrag, einer Baugruppe, einem Folgeprozess von Werkstücken oder einem zugehörigen Ladungsträger (Transportwagen, Palette, Sammelbehälter) zugeordnet sein. Die Familienzugehörigkeit kann dabei dynamisch im laufenden Bearbeitungsvorgang geändert werden. Mobileinheiten können dabei verschiedenen Familien gleichzeitig angehören. Ferner können Familien von Mobileinheiten eine spezifische Verknüpfung betreffen, beispielsweise alle Ladungsträger, alle Transportmittel, alle Bearbeiter, alle Werkstücke, alle Maschinen etc., oder eine Familie von Mobileinheiten kann einen spezifischen Status einer Mobileinheit betreffen, beispielsweise einen Ladungsstatus der Mobileinheiten.

Entsprechend kann die Analyse wie die Erfassung von Prozesszuständen auf der Auswertung von derartigen Familien von Mobileinheiten basieren.

Über die hierin offenbarte Erweiterung einer Fertigungsanlage mit einer Innenraum-Ortung und Schnittstellen zum Fertigungssteuerungssystem kann die Position der Werkstücksammelstelleneinheiten festgestellt und/oder die Bewegung der Hand eines Bedieners festgehalten werden. Solch eine Ortung über ein Ultra-Wideband-System kann aus vier oder mehr "Anchors" und einem oder mehreren "Tags" aufgebaut werden. Die Anchors dienen als Receiver und können um den Arbeitsraum stationär positioniert werden. Die Tags werden an z. B. allen Werkstücksammelstelleneinheiten und beispielsweise der Hand des Bedieners angebracht und dienen zur Positionsbestimmung derselben. Weitere Systeme zur Innenraum-Ortung umfassen z. B. Bluetooth, WiFi, Infrarot und RFID."

Wird die Werkstücksammelstelleneinheit in ein Ortungssystem integriert, kann mit einem entsprechenden System in der Werkzeugmaschinenhalle, in der mehrere Bearbeitungsmaschinen und/oder Arbeitsplätze vorgesehen sind, über Sender-Empfängersysteme eine Ortung ermöglicht werden.

Ein Bediener, der in einer Schaltzentrale den Bearbeitungsvorgang überwacht und steuert, kann auf seinem Überwachungsmonitor sehen, wo ein spezifischer Auftrag gerade in der Prozesskette steht und wie sein Status gerade ist. Entsprechend kann er auch direkt auf die Anzeigeeinheit zugreifen, um angezeigte Daten (Werkstückinformation) wie Präferenzen, Arbeitsschritte etc. anzupassen. Alternativ oder ergänzend kann dies auch vor Ort mit einer Eingabevorrichtung an der Werkstücksammelstelleneinheit (z. B. Taster, Schalter, Touchpad) erfolgen oder über eine Datenschnittstelle, die einer externen z. B. mobilen Eingabeeinheit Zugang verschafft (Smartphone, Ipad, Smartwatch etc.). Entsprechend weist die Werkstücksammelstelleneinheit z. B. ein Nahfeldfunknetz (Bluetooth, NFC) auf. Dies kann beispielsweise auch als Teil eines Nahfeldortungssystems zur Ortung der Werkstücksammelstelleneinheit eingesetzt werden. Letzteres erleichtert das Finden einer Werkstücksammelstelleneinheit, wenn sie z. B. in einer Vielzahl von Werkstücksammelstelleneinheiten versteckt ist. Beispielsweise wird die Werkstücksammelstelleneinheit gezielt angesteuert, damit die Signalvorrichtung (z. B. eine hell leuchtende LED) aktiviert wird.

Die Nahfeldortung kann ferner beispielsweise beim Absortieren eingesetzt werden, indem z. B. der Ort einer Hand (insbesondere eines intelligenten Handschuhs, der mit dem Ortungssystem wechselwirkt) von der Werkstücksammelstelleneinheit aus geortet wird. Entnimmt die "Hand" eines Bedieners ein Bauteil vom Restgitter, wird der Bauteilort im MES vom Restgitter auf die Hand gebucht. Bewegt sich die Hand in die Nähe eines Ortungssystems der Werkstücksammelstelleneinheit, wird im MES gebucht, dass dieses Teil an der zugehörigen Werkstücksammelstelleneinheit abgelegt wurde. Zum einen kann das Ortungssystem erkennen, dass die Hand mit dem Werkstück in die Nähe kam. Zum anderen kann ein übergeordnetes System (z. B. das MES) die Werkstücksammelstelleneinheit und die Handposition verknüpfen.

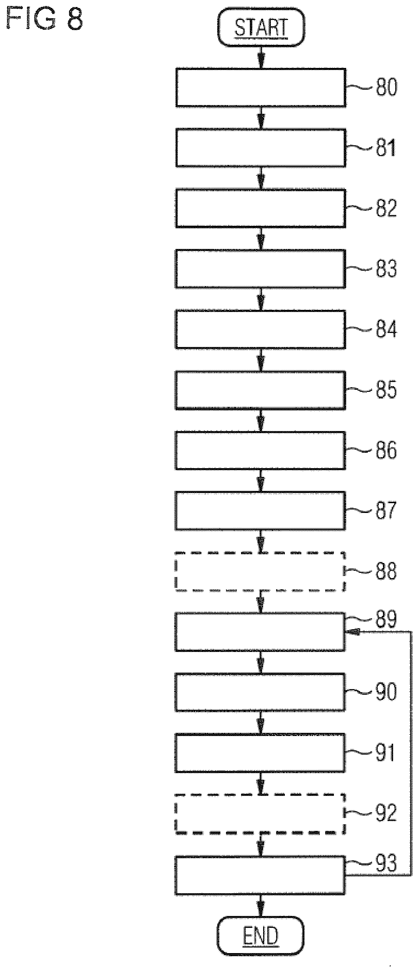

In Fig. 8 sind beispielhaft Verfahrensschritte einer industriellen Fertigung eines Endprodukts gezeigt, die mit einem hierin offenbarten Fertigungssteuerungssystem, insbesondere dem MES 3 durchgeführt werden kann.

In einem ersten Schritt 80 erfolgt die Entgegennahme eines Fertigungsauftrags (mit einem Bearbeitungsplan 37) zur Fertigung eines Endprodukts aus einem Werkstück 23 mit dem MES 3, das z. B. in einer Datenverarbeitungsvorrichtung 30A implementiert ist. In einem folgenden Schritt 81 erfolgt die Auswahl einzelner Bearbeitungsschritte mittels des MES 3. In einem weiteren Schritt 82 erfolgt die Auswahl einer Reihenfolge vom MES 3 (oder einem Bediener), in der die Bearbeitungsschritte durchgeführt werden sollen. Die Bearbeitungsschritte können dabei einzelne oder mehrere der folgenden Vorgänge sein: Schneiden, insbesondere Laserschneiden, Stanzen, Biegen, Bohren, Gewindeschneiden, Schleifen, Zusammenfügen, Schweißen, Nieten, Schrauben, Pressen, Behandeln der Kanten und Oberflächen.

In einem weiteren Schritt 83 erfolgt die datentechnische Zuordnung jedes der Bearbeitungsschritte zu einer Maschine 7 oder einem Arbeitsplatzeinheit. Die Arbeitsplatzeinheit kann ein wie oben beschriebener Arbeitsplatz 26, insbesondere ein Handarbeitsplatz sein.

In einem weiteren Schritt 84 erfolgt die datentechnische Zuordnung des Fertigungsauftrags zu einem Mobileinheitsdatensatz 39, der in der MES 3 für eine Mobileinheit abgelegt ist. Dieser Schritt 84 kann dem in Fig. 7 gezeigten Schritt 51A entsprechen. Schritt 84 kann insbesondere auch schon früher, z. B. nach einem oder mehreren der zuvor beschriebenen Verfahrensschritte, erfolgen.

In einem weiteren Schritt 85 erfolgt die Fertigung eines Werkstücks 23, das zumindest teilweise ein Teil des Endprodukts ist, insbesondere nach einem ersten der Bearbeitungsschritte an der diesem Bearbeitungsschritt zugewiesenen Maschine 7 oder Arbeitsplatzeinheit. Z. B. wird hier ein Teil des Fertigungsauftrags aus einem Blech geschnitten. Da als nachfolgender Bearbeitungsschritt auch noch ein Fräsen oder Stanzen notwendig sein kann, kann dieses Werkstück 23 noch mehr Material als das Endprodukt, also nur teilweise das Endprodukt bilden bzw. ein Teil von diesem sein.

In einem weiteren Schritt 86 erfolgt die räumliche Zuordnung der dem Fertigungsauftrag zugeordneten Mobileinheit 15 zu dem gefertigten Werkstück 23. Dieser Schritt 86 kann dem in Fig. 7 gezeigtem Schritt 51B entsprechen. In einem weiteren Schritt 87 erfolgt das Speichern einer Änderung des Status des Fertigungsauftrags in dem MES 3.

In einem optionalen Schritt 88 erfolgt das Speichern der Position der Mobileinheit 15 zu dem Fertigungsauftrag.

In einem weiteren Schritt 89 erfolgt der Transport des Werkstücks 23 zusammen mit der Mobileinheit 15 gemäß dem Fertigungsauftrag zu der nächsten Maschine 7 oder der nächsten Arbeitsplatzeinheit in der vorbestimmten Reihenfolge. Dies kann in Folge einer Anweisung des MES 3 durch eine Person oder durch einen automatisierten Transportprozess erfolgen.

In einem weiteren Schritt 90 wird dieser Bearbeitungsschritt an der ihm zugewiesenen Maschine 7 oder Arbeitsplatzeinheit durchgeführt.

In einem optionalen Schritt 91 erfolgt das Speichern der Position der Mobileinheit 15 für diesen Fertigungsschritt im Fertigungsauftrag.

In einem weiteren Schritt 92 erfolgt das erneute Speichern einer Änderung des Status des Fertigungsauftrags im MES 3.

In einem weiteren Schritt 93 wird entschieden, ob mit dem Verfahrensschritt 89, d.h., einem Transport zu einem weiteren Bearbeitungsschritt, fortgefahren werden soll oder ob die Fertigung beendet ist.

Während dieser Fertigungsschritte ist stets eine Ortung der Mobileinheit 15 mittels des Ortungssystems 5 auf Basis von elektromagnetischen Signalen gesteuert durch das MES 3 möglich. Damit kann das MES 3 zu jeder Zeit über Daten wie dem aktuellen Status und dem aktuellen Ort des Werkstücks 23 verfügen. MES 3, Mobileinheit 15 und Ortungssystem 5 können insbesondere wie zuvor beschrieben ausgebildet sein.

Alle zuvor beschriebenen Verfahrensschritte, die von einer Fertigungssteuerung, einem Fertigungssteuerungssystem, einem Ortungssystem oder vom MES 3 ausgeführt werden, können auch mittels einer oder mehrerer Datenverarbeitungsvorrichtungen, die Mittel zur Durchführung der Verfahrensschritte aufweisen, realisiert sein.

## Patentansprüche

1. Verfahren für eine Zuordnung eines zu bearbeitenden Werkstücks (23) zu einer Mobileinheit (15) eines Innenraum-Ortungssystems (5), das in einer Fertigungshalle bei der industriellen Bearbeitung von Werkstücken (23), insbesondere in der Stahl- und/oder Blechverarbeitung, eingesetzt wird, mit den Schritten:
Bereitstellen eines Fertigungssteuerungssystems (1) für die industrielle Bearbeitung von Werkstücken (23) mit einer Werkzeugmaschine (7) gemäß werkstückspezifischen Bearbeitungsplänen (37), in denen jeweils Auftragsinformation umfassend Bearbeitungsparameter, Werkstückparameter und mindestens ein Bearbeitungsplan-Assistenz-Werkstückdatensatz definiert ist, wobei der Bearbeitungsplan-Assistenz-Werkstückdatensatz zum Abgleich mit einem Mess-Assistenz-Werkstückdatensatz (41A) vorgesehen ist und umfasst
- einen Bilddatensatz (37A) des zuzuordnenden Werkstücks (23) und/oder
- einen das Werkstück (23) identifizierenden Codierungsdatensatz (37B),
Bereitstellen (Schritt 51A) von mindestens einer Mobileinheit (15), die einem Bearbeitungsplan (37) zugeordnet ist und deren Position mit dem Innenraum-Ortungssystem (5) des Fertigungssteuerungssystems (1) bestimmbar ist,
Bereitstellen eines Assistenzsystems (41), das zum Erfassen von Bilddaten von zuzuordnenden Werkstücken (23) zur Erzeugung von einem Bilddatensatz (37A) für ein zuzuordnendes Werkstück (23) und/oder zum Erfassen einer Codierung zur Erzeugung von einem Codierungsdatensatz für ein zuzuordnendes Werkstück (23) als Mess-Assistenz-Werkstückdatensätzen (41A) für Werkstücke (23) ausgebildet ist,
Erfassen (Schritt 61A) eines zuzuordnenden Werkstücks (23) mit dem Assistenzsystem (41) und Erzeugen (Schritt 61B) des Mess-Assistenz-Werkstückdatensatzes (41A) für das zuzuordnende Werkstück (23),
Abgleichen (Schritt 61C), im Fertigungssteuerungssystem (1) oder im Assistenzsystem (41), des Mess-Assistenz-Werkstückdatensatzes (41A) mit den Bearbeitungsplan-Assistenz-Werkstückdatensätzen zum Identifizieren eines Bearbeitungsplans (37), der zum erfassten zuzuordnenden Werkstück (23) gehört, und
räumliches Zuordnen (Schritt 61D) des erfassten zuzuordnenden Werkstücks (23) zu der Mobileinheit (15), die dem identifizierten Bearbeitungsplan (37) zugeordnet ist, indem die Mobileinheit (15) am erfassten zuzuordnenden Werkstück (23) selbst positioniert wird oder das erfasste zuzuordnende Werkstück (23) auf einer Werkstücksammelstelleneinheit abgelegt wird, an der die Mobileinheit (15) vorgesehen ist.

2. Verfahren nach Anspruch 1, wobei der Codierungsdatensatz einen RFID- oder Strich-Codierungsdatensatz (37B) oder einen Codierungsdatensatz einer in das zuzuordnende Werkstück (23) eingebrachten magnetischen Codierung umfasst.

3. Verfahren nach einem der vorhergehenden Ansprüche, wobei das Assistenzsystem (41) zum Erfassen eines Mess-Assistenz-Werkstückdatensatzes (41A) für ein von einem Bediener (31) ergriffenes zuzuordnendes Werkstück (23) ausgebildet ist.

4. Verfahren nach einem der vorhergehenden Ansprüche, wobei das Assistenzsystem (41) an einer Werkzeugmaschine (7) angeordnet ist und zum Erfassen von Mess-Assistenz-Werkstückdatensätzen (41A) für Werkstücke (23), die von der Werkzeugmaschine (7) ausgegeben werden und zur weiteren Bearbeitung vorgesehen sind, ausgebildet ist.

5. Verfahren nach einem der vorhergehenden Ansprüche, wobei die Werkzeugmaschine (7) dazu ausgebildet ist, das zuzuordnende Werkstück (23) aufzunehmen und in einem der Mobileinheit (15) zugeordneten Ablagebereich (24) abzulegen.

6. Verfahren nach einem der vorhergehenden Ansprüche, wobei die Werkzeugmaschine (7) dazu ausgebildet ist, die Mobileinheit (15) und/oder das zuzuordnende Werkstück (23) aufzunehmen und bei einer Werkstücksammelstelle abzulegen, insbesondere auf einem Wagen (21) oder einer Palette.

7. Verfahren nach einem der vorhergehenden Ansprüche, wobei das Assistenzsystem (41) zur Unterstützung eines Absortiervorgangs von auf einem Sortiertisch räumlich nebeneinander angeordneten Werkstücken (23) eine Kamera (35) zum bildgebenden Erfassen des Sortiertischs und zum Erzeugen des Mess-Assistenz-Werkstückdatensatzes (41A) für mindestens eines der Werkstücke (23) aus einer Mehrzahl von Absortier-Bilddatensätzen aufweist und
der Bearbeitungsplan-Assistenz-Werkstückdatensatz ein Bearbeitungsplan-Bilddatensatz ist, der der Fertigung der räumlich nebeneinander angeordneten Werkstücke (23) zugrunde liegt.

8. Verfahren nach Anspruch 7, wobei die zuzuordnenden Werkstücke (23) mit einer Flachbettwerkzeugmaschine, insbesondere einer Laserschneid- oder Stanz-Flachbettwerkzeugmaschine, gemäß Bearbeitungsplänen (37) erzeugt und dem Sortiertisch zugeführt werden.

9. Verfahren nach einem der vorhergehenden Ansprüche, wobei das Fertigungssteuerungssystem (1) dazu ausgebildet ist, der Mobileinheit (15) einen Werkstückparameter (37C) bereitzustellen, der zum Ausgeben von Information über das Werkstück (23), das der Mobileinheit (15) zugeordnet ist, vorgesehen ist, um eine manuelle Durchführung der räumlichen Zuordnung zu unterstützen.

10. Verfahren nach einem der vorhergehenden Ansprüche, wobei das Fertigungssteuerungssystem (1) dazu ausgebildet ist, die Mobileinheit (15) derart anzusteuern, mindestens einen Bearbeitungsparameter und/oder Werkstückparameter auf einer Anzeigeneinheit (17) darzustellen.

11. Verfahren nach einem der vorhergehenden Ansprüche, ferner mit einem Mobileinheitsdaten-Zuordnungsvorgang (51A), bei dem in dem Fertigungssteuerungssystem (1) ein Mobileinheitsdatensatz (39) der mindestens einen Mobileinheit (15) dem Bearbeitungsplan (37) zugeordnet werden, wobei der Mobileinheitsdaten-Zuordnungsvorgang (51A) umfasst:
- ein Positionieren und/oder Schütteln der Mobileinheit in einer geometrisch definierten Zone (27) in der Fertigungshalle,
- ein Interagieren mit dem Fertigungssteuerungssystem (12) über ein Bediener-Interface,
- eine Eingabe einer zu dem Bearbeitungsplan (37) zugehörigen Referenznummer in das Fertigungssteuerungssystem (1),
- ein automatisiertes oder teilautomatisiertes Aktivieren der Mobileinheit (15) über Sensoren der Mobileinheit (15) umfassend eine Eingabetaste (19) an der Mobileinheit (19), einen Beschleunigungssensor, einen Lagesensor und/oder einen Schallsensor und/oder
- ein Verknüpfen des Mobileinheitsdatensatzes (39) mit einem Default-Gegenstand in dem Fertigungssteuerungssystem (1).

12. Verfahren nach Anspruch 11, wobei bei dem Mobileinheitsdaten-Zuordnungsvorgang (51A) zumindest teilweise Auftragsinformation auf die Mobileinheit (15) geladen wird.

13. Verfahren nach einem der vorhergehenden Ansprüche, wobei das Assistenzsystem (41) Zugriff auf die Bearbeitungsplan-Assistenz-Werkstückdatensätze der Fertigungssteuerung (1) hat und das Abgleichen vom Assistenzsystem (41) durchgeführt wird.

14. Verfahren nach einem der vorhergehenden Ansprüche, wobei das Verfahren ferner für eine Zuordnung mindestens eines zuzuordnenden Werkzeugs oder einer Werkstücksammelstelleneinheit (21) zu einer Mobileinheit (15) des Innenraum-Ortungssystems (5) basierend auf einem Abgleichen eines Mess-Assistenz-Werkzeugdatensatzes (41A) mit Bearbeitungsplan-Assistenz-Werkzeugdatensätzen eingesetzt wird.

15. Fertigungssteuerungssystem (1) zur Steuerung von Fertigungsprozessen in einer Fertigungshalle bei der industriellen Fertigung von zuzuordnenden Werkstücken (23), insbesondere in der Stahl- und/oder Blechverarbeitung, in einer Fertigungshalle, mit
einem Innenraum-Ortungssystem (5) zur Unterstützung der Fertigungssteuerung der Fertigungsprozesse mit mehreren fest in der Fertigungshalle installierten Sende-Empfangseinheiten (13), mindestens einer Mobileinheit (15) und einer Analyseeinheit (11), wobei die Sende-Empfangseinheiten (13) und die mindestens eine Mobileinheit (15) zum Aussenden und Empfangen von elektromagnetischen Signalen ausgebildet sind und die Analyseeinheit (11) ausgebildet ist zum Bestimmen von Laufzeiten der elektromagnetischen Signale zwischen den Sende-Empfangseinheiten (13) und der mindestens einen Mobileinheit (15) und zum Bestimmen der Position der mindestens einen Mobileinheit (15) in der Fertigungshalle aus den Laufzeiten der elektromagnetischen Signale und wobei das Innenraum-Ortungssystem (5) zum Austausch und Bereitstellen von Daten zur Position von mindestens einer Mobileinheit (15) in der Fertigungshalle als Teil des Fertigungssteuerungssystems (1) ausgebildet ist, und
wobei das Fertigungssteuerungssystem (1) ferner dazu eingerichtet ist, ein Verfahren nach einem der Ansprüche 1 bis 14 auszuführen.

## Claims

1. A method for assigning a workpiece (23) to be machined to a mobile unit (15) of an interior positioning system (5) which is used in a production hall during the industrial machining of workpieces (23), in particular in steel and/or sheet metal machining, having the steps of:
providing a production control system (1) for the industrial machining of workpieces (23) using a machine tool (7) according to machining plans (37) which are specific to the workpiece, in which order information is defined, including machining parameters, workpiece parameters and at least one machining plan assistance workpiece data set, wherein the machining plan assistance workpiece data set is provided for comparison with a measurement assistance workpiece data set (41A) and comprises
- an image data set (37A) of the workpiece (23) to be assigned and/or
- a coding data set (37B) identifying the workpiece (23),
providing (step 51A) at least one mobile unit (15) which is assigned a machining plan (37) and the position of which can be determined by the interior positioning system (5) of the production control system (1),
providing an assistance system (41) for detecting image data of workpieces (23) to be assigned in order to generate an image data set (37A) for a workpiece (23) to be assigned and/or to detect a coding in order to generate a coding data set for a workpiece (23) to be assigned as measurement assistance workpiece data sets (41A) for workpieces (23),
detecting (step 61A) a workpiece (23) to be assigned using the assistance system (41) and generating (step 61B) the measurement assistance workpiece data set (41A) for the workpiece (23) to be assigned,
comparing (step 61C), in the production control system (1) or in the assistance system (41), the measurement assistance workpiece data set (41A) with the machining plan assistance workpiece data sets in order to identify a machining plan (37) which belongs to the detected workpiece to be assigned (23), and
spatially assigning (step 61D) the detected workpiece (23) to be assigned to the mobile unit (15), which is assigned the identified machining plan (37) by positioning the mobile unit (15) on the detected workpiece (23) to be assigned itself or by placing the detected workpiece (23) to be assigned on a workpiece collection point unit where the mobile unit (15) is provided.

2. The method according to claim 1, wherein the coding data set comprises an RFID or barcode coding data set (37B) or a coding data set of a magnetic coding introduced into the workpiece (23) to be assigned.

3. The method according to either one of the preceding claims, wherein the assistance system (41) is designed to detect a measurement assistance workpiece data set (41A) for a workpiece (23) to be assigned grasped by an operator (31).

4. The method according to any one of the preceding claims, wherein the assistance system (41) is arranged on a machine tool (7) and is designed to detect measurement assistance workpiece data sets (41A) for workpieces (23) which are output by the machine tool (7) and are provided for further machining.

5. The method according to any one of the preceding claims, wherein the machine tool (7) is designed to receive the workpiece (23) to be assigned and to place it in a storage area (24) assigned to the mobile unit (15).

6. The method according to any one of the preceding claims, wherein the machine tool (7) is designed to receive the mobile unit (15) and/or the workpiece (23) to be assigned and to place it at a workpiece collection point, in particular on a trolley (21) or a pallet.

7. The method according to any one of the preceding claims, wherein the assistance system (41) for supporting a sorting process of workpieces (23) arranged spatially next to each other on a sorting table has a camera (35) for imaging the sorting table and for generating the measurement assistance workpiece data set (41A) for at least one of the workpieces (23) from a plurality of sorting image data sets and
the machining plan assistance workpiece data set is a machining plan image data set which forms the basis for the production of the spatially adjacent workpieces (23).

8. The method according to claim 7, wherein the workpieces (23) to be assigned are produced with a flatbed machine tool, in particular a laser cutting or punching flatbed machine tool, according to machining plans (37) and fed to the sorting table.

9. The method according to any one of the preceding claims, wherein the production control system (1) is designed to provide the mobile unit (15) with a workpiece parameter (37C) which is intended to output information about the workpiece (23) assigned to the mobile unit (15) in order to support a manual execution of the spatial assignment.

10. The method according to any one of the preceding claims, wherein the production control system (1) is designed to control the mobile unit (15) in such a way as to display at least one machining parameter and/or workpiece parameter on a display unit (17).

11. The method according to any one of the preceding claims, further comprising a mobile unit data assignment process (51A) in which a mobile unit data set (39) of the at least one mobile unit (15) is assigned to the machining plan (37) in the production control system (1), wherein the mobile unit data assignment process (51A) comprises:
- positioning and/or shaking the mobile unit in a geometrically defined zone (27) in the production hall,
- interacting with the production control system (12) via an operator interface,
- entering a reference number belonging to the machining plan (37) into the production control system (1),
- activating the mobile unit (15) in an automated or semi-automated manner via sensors of the mobile unit (15) comprising an input button (19) on the mobile unit (19), an accelerometer, a position sensor, and/or a sound sensor and/or
- linking the mobile unit data set (39) with a default object in the production control system (1).

12. The method according to claim 11, wherein in the mobile unit data assignment process (51A) at least part of the order information is loaded onto the mobile unit (15).

13. The method according to any one of the preceding claims, wherein the assistance system (41) has access to the machining plan assistance workpiece data sets of the production control (1) and the comparison is performed by the assistance system (41).

14. The method according to any one of the preceding claims, wherein the method is further used for assigning at least one tool to be assigned or a workpiece collection point unit (21) to a mobile unit (15) of the interior positioning system (5) based on a comparison of a measurement assistance tool data set (41A) with machining plan assistance tool data sets.

15. A production control system (1) for controlling production processes in a production hall during the industrial production of assigned workpieces (23), in particular in steel and/or sheet metal machining, in a production hall, having
an interior positioning system (5) for supporting the production control of the production processes with a plurality of transceiver units (13) permanently installed in the production hall, at least one mobile unit (15) and an analysis unit (11), wherein the transceiver units (13) and the at least one mobile unit (15) are designed for transmitting and receiving electromagnetic signals and the analysis unit (11) is designed for determining the propagation times of the electromagnetic signals between the transceiver units (13) and the at least one mobile unit (15) and for determining the position of the at least one mobile unit (15) in the production hall from the propagation times of the electromagnetic signals, and wherein the interior positioning system (5) is designed for exchanging and providing data on the position of at least one mobile unit (15) in the production hall as part of the production control system (1), and
wherein the production control system (1) is further configured to perform a method according to any one of claims 1 to 14.

## Revendications

1. Procédé d'affectation d'une pièce (23) à usiner à une unité mobile (15) d'un système de localisation en intérieur (5) utilisé dans un atelier de production pour l'usinage industriel de pièces (23), en particulier dans le traitement de l'acier et/ou de la tôle, comportant les étapes consistant à :
fournir un système de contrôle de production (1) pour l'usinage industriel de pièces (23) à l'aide d'une machine-outil (7) selon des plans d'usinage (37) spécifiques à une pièce dans lesquels des informations de commande sont respectivement définies, comprenant des paramètres d'usinage, des paramètres de pièce et au moins un ensemble de données de pièces d'assistance au plan d'usinage, l'ensemble de données de pièces d'assistance au plan d'usinage étant prévu pour être comparé à un ensemble de données de pièces d'assistance à la mesure (41A) et comprenant
- un ensemble de données d'image (37A) de la pièce (23) à affecter et/ou
- un ensemble de données de codage (37B) identifiant la pièce (23),
fournir (étape 51A) au moins une unité mobile (15) qui est affectée à un plan d'usinage (37) et dont la position peut être déterminée par le système de localisation en intérieur (5) du système de contrôle de production (1),
fournir un système d'assistance (41) conçu pour saisir des données d'image de pièces (23) à affecter afin de générer un ensemble de données d'image (37A) pour une pièce (23) à affecter et/ou pour saisir un codage afin de générer un ensemble de données de codage pour une pièce (23) à affecter en tant qu'ensembles de données de pièces d'assistance à la mesure (41A) pour les pièces (23),
saisir (étape 61A) une pièce (23) à affecter à l'aide du système d'assistance (41) et générer (étape 61B) l'ensemble de données de pièces d'assistance à la mesure (41A) pour la pièce (23) à affecter,
comparer (étape 61C), dans le système de contrôle de production (1) ou dans le système d'assistance (41), l'ensemble de données de pièces d'assistance à la mesure (41A) avec les ensembles de données de pièces d'assistance au plan d'usinage pour identifier un plan d'usinage (37) qui appartient à la pièce (23) à affecter saisie, et
affecter spatialement (étape 61D) la pièce (23) à affecter saisie à l'unité mobile (15) qui est affectée au plan d'usinage (37) identifié en positionnant l'unité mobile (15) sur la pièce (23) à affecter saisie proprement dite ou en plaçant la pièce (23) à affecter saisie sur une unité de point de collecte de pièces où l'unité mobile (15) est prévue.

2. Procédé selon la revendication 1, dans lequel l'ensemble de données de codage comprend un ensemble de données de codage RFID ou de code-barres (37B) ou un ensemble de données de codage d'un codage magnétique incorporé dans la pièce (23) à affecter.

3. Procédé selon l'une quelconque des revendications précédentes, dans lequel le système d'assistance (41) est conçu pour saisir un ensemble de données de pièces d'assistance à la mesure (41A) pour une pièce (23) à affecter prise par un opérateur (31).

4. Procédé selon l'une quelconque des revendications précédentes, dans lequel le système d'assistance (41) est agencé sur une machine-outil (7) et est conçu pour saisir des ensembles de données de pièces d'assistance à la mesure (41A) pour les pièces (23) qui sont délivrées par la machine-outil (7) et qui sont prévues pour un usinage ultérieur.

5. Procédé selon l'une quelconque des revendications précédentes, dans lequel la machine-outil (7) est conçue pour recevoir la pièce (23) à affecter et pour la placer dans une zone de stockage (24) affectée à l'unité mobile (15).

6. Procédé selon l'une quelconque des revendications précédentes, dans lequel la machine-outil (7) est conçue pour recevoir l'unité mobile (15) et/ou la pièce (23) à affecter et pour la placer au niveau d'un point de collecte de pièces, en particulier sur un chariot (21) ou sur une palette.

7. Procédé selon l'une quelconque des revendications précédentes, dans lequel le système d'assistance (41), destiné à faciliter un processus de tri de pièces (23) agencées spatialement les unes à côté des autres sur une table de tri, présente une caméra (35) pour saisir, en formant des images, la table de tri et pour générer l'ensemble de données de pièces d'assistance à la mesure (41A) pour au moins une des pièces (23) à partir d'une pluralité d'ensembles de données d'images de tri et l'ensemble de données de pièces d'assistance au plan d'usinage est un ensemble de données d'images de plan d'usinage qui constitue la base de la production des pièces (23) agencées spatialement les unes à côté des autres.

8. Procédé selon la revendication 7, dans lequel les pièces (23) à affecter sont produites avec une machine-outil à banc plat, en particulier une machine-outil à banc plat de découpe ou de poinçonnage laser, selon les plans d'usinage (37) et acheminées vers la table de tri.

9. Procédé selon l'une quelconque des revendications précédentes, dans lequel le système de contrôle de production (1) est conçu pour fournir à l'unité mobile (15) un paramètre de pièce (37C) qui est prévu pour délivrer des informations sur la pièce (23) qui est affectée à l'unité mobile (15) afin de faciliter une exécution manuelle de l'affectation spatiale.

10. Procédé selon l'une quelconque des revendications précédentes, dans lequel le système de contrôle de production (1) est conçu pour commander l'unité mobile (15) de manière à représenter au moins un paramètre d'usinage et/ou un paramètre de pièce sur une unité d'affichage (17).

11. Procédé selon l'une quelconque des revendications précédentes, comportant en outre un processus d'affectation (51A) de données d'unité mobile dans lequel un ensemble de données (39) d'unité mobile de l'au moins une unité mobile (15) est affecté au plan d'usinage (37) dans le système de contrôle de production (1), le processus d'affectation (51A) de données d'unité mobile comprenant :
- un positionnement et/ou une agitation de l'unité mobile dans une zone géométriquement définie (27) dans l'atelier de production,
- une interaction avec le système de contrôle de production (12) par l'intermédiaire d'une interface opérateur,
- une entrée d'un numéro de référence appartenant au plan d'usinage (37) dans le système de contrôle de production (1),
- une activation automatisée ou semi-automatisée de l'unité mobile (15) par l'intermédiaire de capteurs de l'unité mobile (15) comprenant une touche entrée (19) sur l'unité mobile (19), un accéléromètre, un capteur de situation et/ou un capteur sonore et/ou
- une liaison de l'ensemble de données (39) d'unité mobile à un objet par défaut dans le système de contrôle de production (1).

12. Procédé selon la revendication 11, dans lequel, dans le processus d'affectation (51A) de données d'unité mobile, les informations de commande sont chargées au moins partiellement sur l'unité mobile (15).

13. Procédé selon l'une quelconque des revendications précédentes, dans lequel le système d'assistance (41) a accès aux ensembles de données de pièces d'assistance du plan d'usinage du contrôle de production (1) et la comparaison est exécutée par le système d'assistance (41).

14. Procédé selon l'une quelconque des revendications précédentes, le procédé étant en outre utilisé pour affecter au moins un outil à affecter ou une unité de point de collecte de pièces (21) à une unité mobile (15) du système de localisation en intérieur (5) sur la base d'une comparaison d'un ensemble de données d'outils d'assistance à la mesure (41A) avec des ensembles de données d'outils d'assistance au plan d'usinage.

15. Système de contrôle de production (1) pour le contrôle de processus de production dans un atelier de production lors de la production industrielle de pièces (23) à affecter, en particulier pour le traitement de l'acier et/ou de la tôle, dans un atelier de production, comportant
un système de localisation en intérieur (5) destiné à faciliter le contrôle de production des processus de production, comportant plusieurs unités émettrices-réceptrices (13) installées à demeure dans l'atelier de production, au moins une unité mobile (15) et une unité d'analyse (11), les unités émettrices-réceptrices (13) et l'au moins une unité mobile (15) étant conçues pour émettre et recevoir des signaux électromagnétiques et l'unité d'analyse (11) étant conçue pour déterminer des temps de propagation des signaux électromagnétiques entre les unités émettrices-réceptrices (13) et l'au moins une unité mobile (15), et pour déterminer la position de l'au moins une unité mobile (15) dans l'atelier de production à partir des temps de propagation des signaux électromagnétiques, et le système de localisation en intérieur (5) étant conçu pour échanger et fournir des données sur la position de l'au moins une unité mobile (15) dans l'atelier de production en tant que partie du système de contrôle de production (1), et
le système de contrôle de production (1) étant en outre conçu pour mettre en œuvre un procédé selon l'une des revendications 1 à 14.
